# EUROPEAN PATENT APPLICATION

(11) **EP 4 380 284 A1**
(43) Date of publication of application: **05.06.2024**
(21) Application number: 22855371.5
(22) Date of filing: 08.08.2022
(51) Int. Cl.: H04W 74/00, H04W 74/08, H04W 72/04

(54) **COMMUNICATION METHOD AND APPARATUS**

(30) Priority: 09.08.2021 CN 202110910585
(71) Applicant: Huawei Technologies Co., Ltd., Shenzhen, Guangdong 518129 (CN)
(72) Inventor: ZHANG, Lili, Shenzhen, Guangdong 518129 (CN); DAI, Xizeng, Shenzhen, Guangdong 518129 (CN); LI, Tie, Shenzhen, Guangdong 518129 (CN); LIU, Jianghua, Shenzhen, Guangdong 518129 (CN)
(74) Representative: Thun, Clemens
(86) International application number: PCT/CN2022/110807
(87) International publication number: WO 2023/016390

(57) **Abstract**

This application relates to the field of communication technologies, and in particular, to a communication method and apparatus. The method includes: sending a first random access sequence to at least one second network device; and receiving indication information from a first network device or the at least one second network device, where the indication information includes information about a second random access sequence, the information about the second random access sequence includes at least one of configuration information, sequence information, resource information, or moment information of the second random access sequence, and the second random access sequence is included in the first random access sequence. According to the method, scanning overheads of a terminal device can be reduced, and beam correspondence can be implemented as soon as possible.

## Description

This application claims priority to Chinese Patent Application No. 202110910585.0, filed with the China National Intellectual Property Administration on August 9, 2021 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Compared with a long term evolution (long term evolution, LTE) access network, a radio access network (radio access network, RAN) of a 5th generation (5th generation, 5G) mobile communication system has a higher carrier frequency band, for example, a frequency band greater than 6 GHz, such as a frequency band of 28 GHz, 38 GHz, or 60 GHz. A high-frequency wireless signal is easily attenuated during space propagation. Therefore, it is difficult for a receiving end to receive a high-quality wireless signal, or even the wireless signal cannot be detected.

To resolve the problem, a beamforming (beamforming, BF) technology may be used to transmit a beam (beam) with good directivity to a specific transmit direction, to improve signal quality corresponding to a case in which the wireless signal arrives at the receiving end, and further improve communication quality between a transmitting end and the receiving end.

Positions of the receiving end or the transmitting end are usually not fixed. Therefore, determining a direction of transmitting a beam is necessary for improving the communication quality between the transmitting end and the receiving end.

### SUMMARY

Embodiments of this application provide a communication method and apparatus, to reduce scanning overheads of a terminal device and implement beam correspondence as soon as possible.

According to a first aspect, an embodiment of this application provides a communication method, applied to a terminal device. The method includes: sending a first random access sequence to at least one second network device; and receiving indication information from a first network device or the at least one second network device, where the indication information includes information about a second random access sequence, the information about the second random access sequence includes at least one of configuration information, sequence information, resource information, or moment information of the second random access sequence, and the second random access sequence is included in the first random access sequence.

In this solution, in a random access process of the terminal device, the network device may feed back the information about the random access sequence to the terminal device. Therefore, the terminal device has an opportunity to send an uplink signal in a directional and targeted manner based on the information, so that beam scanning overheads of the terminal device can be reduced, and beam correspondence between the terminal device and the network device can be implemented as soon as possible.

In a possible implementation, the method further includes: determining, based on the indication information, a direction of sending an uplink signal to the at least one second network device; and sending the uplink signal to the at least one second network device, where the uplink signal includes a sounding reference signal, a demodulation reference signal, or a first uplink signal.

In this implementation, the uplink signal may be sent in the direction determined based on the indication information, so that the uplink signal is sent in a directional and targeted manner, thereby reducing beam scanning overheads of the terminal device and implementing beam correspondence between the terminal device and the network device as soon as possible.

In a possible implementation, the second random access sequence is a random access sequence that is in the first random access sequence and that is detected by the at least one second network device or a random access sequence that is in the first random access sequence, that is detected by the at least one second network device and that satisfies a first condition, and the first condition is that a signal strength is greater than or equal to a first threshold.

In this implementation, a random access sequence with a strong signal strength is selected from the first random access sequence based on the first threshold, and scanning may be preferably performed in a direction in which a beam with the strong signal strength is located. This helps implement beam correspondence as soon as possible while minimizing system costs.

In a possible implementation, there is an association relationship between the direction of sending the uplink signal to the at least one second network device and the information about the second random access sequence or a direction indicated by the information about the second random access sequence.

In this implementation, the terminal device sends the uplink signal to the at least one second network device in the direction that has the association relationship with the information about the second random access sequence or the direction indicated by the information about the second random access sequence, thereby implementing sending of the uplink signal in a directional and targeted manner, reducing beam scanning overheads of the terminal device, and implementing beam correspondence between the terminal device and the network device as soon as possible.

In a possible implementation, the indication information is a random access response message, and the indication information further includes a timing advance TA.

In other words, in this implementation, the terminal device may obtain the timing advance by using the random access response message, so that the uplink signal used to implement beam correspondence can be sent as soon as possible, and further beam correspondence can be implemented as soon as possible.

In a possible implementation, the receiving indication information from a first network device or the at least one second network device includes: receiving the indication information from the first network device from a first frequency band; and the sending the uplink signal to the at least one second network device includes: sending the uplink signal to the at least one second network device on a second frequency band, where a frequency of the second frequency band is higher than a frequency of the first frequency band.

In other words, in this implementation, the first network device may send the indication information to the terminal device over a low frequency band, so that the terminal device can receive the indication information when there is no downlink resource in a high frequency band between at least one network device and the terminal device.

In a possible implementation, the method further includes: receiving configuration information of the uplink signal from the first network device, where the configuration information of the uplink signal includes a sending period of the uplink signal on the second frequency band, the sending period is used to send an uplink signal in the direction determined based on the indication information, and the sending period is less than a sending period of another uplink signal sent to the at least one second network device.

In this implementation, the uplink signal may be sent in the direction determined based on the indication information as soon as possible, to complete beam correspondence as soon as possible.

In a possible implementation, the sending the uplink signal to the at least one second network device includes: sequentially sending the uplink signal based on an order of the information of the second random access sequence included in the indication information.

In a possible implementation, the method further includes: obtaining configuration information of the first random access sequence from the first network device, where the configuration information of the first random access sequence is information about the first random access sequence sent to the at least one second network device, and the configuration information of the first random access sequence includes at least one of the following: a quantity of times for sending the first random access sequence in at least one direction, and an interval for sending the first random access sequences in at least one direction.

In other words, in this implementation, the terminal device may send the random access sequence based on the configuration information, to efficiently send the random access sequence.

In a possible implementation, the sending a first random access sequence to at least one second network device includes:
after sending the first random access sequence to the at least one second network device in a first quantity of directions based on the configuration information of the first random access sequence, starting a receive window for the indication information, and receiving the indication information in the receive window for the indication information, where the first quantity is an integer greater than or equal to 1.

In a possible implementation, the first random access sequence includes a first part of the first random access sequence and a second part of the first random access sequence; and second indication information includes information about a third random access sequence, the third random access sequence belongs to the first part of the first random access sequence, and the second indication information is received in a receive window for the second part of the first random access sequence.

In this implementation, the information about the third random access sequence that is in the first part of the first random access sequence and that is detected by at least one network device may be received by the terminal device in the receive window for the second part of the first random access sequence. Therefore, a case in which the information about the random access sequence detected by the at least one network device misses being detected or not transmitted can be reduced or avoided, and beam correspondence between the terminal device and the at least one network device can be implemented as soon as possible.

In a possible implementation, the second indication information further includes information about a fourth random access sequence, and the fourth random access sequence belongs to the second part of the first random access sequence.

In this implementation, the random access sequence that is in the first part of the first random access sequence and that is detected by at least one network device and the random access sequence that is in the second part of the first random access sequence and that is detected by the at least one network device can be received by the terminal device in the receive window for the second part of the first random access sequence.

In a possible implementation, the method further includes: when the terminal device receives first indication information and receives the second indication information, the terminal device ignores the information about the third random access sequence included in the second indication information; and when the terminal device fails to receive the first indication information but receives the second indication information, the terminal device sends the uplink signal based on the second indication information, where the first indication information is received in a receive window for the first part of the first random access sequence.

In this implementation, indication information corresponding to a random access sequence that is subsequently detected by at least one network device may be used to send, to the terminal device, information about a random access sequence that is previously detected by the at least one network device. This improves reliability of receiving the information about the random access sequence by the terminal device and implements beam correspondence between the terminal device and the at least one network device as soon as possible.

According to a second aspect, an embodiment of this application provides a communication method, applied to a first network device. The method includes: sending indication information to a terminal device, where the indication information includes information about a second random access sequence, and the information about the second random access sequence includes at least one of configuration information, sequence information, resource information, or moment information of the second random access sequence.

In this solution, in a random access process of the terminal device, the first network device may feed back the information about the random access sequence to the terminal device. Therefore, the terminal device has an opportunity to send an uplink signal in a directional and targeted manner based on the information, so that beam scanning overheads of the terminal device can be reduced, and beam correspondence between the terminal device and the network device can be implemented as soon as possible.

In a possible implementation, the method further includes: receiving information about a fifth random access sequence from at least one second network device, where the second random access sequence belongs to the fifth random access sequence.

In a possible implementation, the fifth random access sequence is a random access sequence that is in a first random access sequence and that is detected by the at least one second network device or a random access sequence that is in a first random access sequence, that is detected by the at least one second network device and that satisfies a first condition, the first random access sequence is sent by the terminal device to the at least one second network device, and the first condition is that a signal strength is greater than or equal to a first threshold.

In a possible implementation, the method further includes: receiving a signal strength of the fifth random access sequence from the at least one second network device; and determining the second random access sequence from the fifth random access sequence based on the signal strength of the fifth random access sequence.

In a possible implementation, the determining the second random access sequence from the fifth random access sequence based on the signal strength of the fifth random access sequence includes: sorting signal strengths of the fifth random access sequence, and selecting fifth random access sequences corresponding to N highest signal strengths as the second random access sequence, where N is a positive integer greater than or equal to 1.

In this implementation, scanning is preferably performed in a direction in which a beam with the highest signal strength is located. This helps implement beam correspondence as soon as possible while minimizing system costs and determines a beam used for uplink data communication as soon as possible, thereby implementing the beam correspondence between the terminal device and at least one network device as soon as possible.

In a possible implementation, the first threshold is notified by the first network device to the at least one second network device.

In a possible implementation, the indication information is a random access response message, and the indication information further includes a timing advance TA.

In a possible implementation, the sending indication information to a terminal device includes: sending the indication information to the terminal device from a first frequency band, where a frequency of the first frequency band is lower than a frequency of a second frequency band, and the second frequency band is a frequency band used by the terminal device to send an uplink signal to the at least one second network device.

In a possible implementation, the method further includes: sending configuration information of the uplink signal to the terminal device and/or the at least one second network device, where the configuration information of the uplink signal includes a sending period of the uplink signal on the second frequency band, the sending period is used to send an uplink signal in a direction determined based on the indication information, and the sending period is less than a sending period of another uplink signal sent by the terminal device to the at least one second network device.

In a possible implementation, the method further includes: sending configuration information of the first random access sequence to the terminal device and/or the at least one second network device, where the configuration information of the first random access sequence is used by the terminal device to send the first random access sequence to the at least one second network device, and the configuration information of the first random access sequence includes at least one of the following: a quantity of times for sending the first random access sequence in at least one direction, and an interval for sending the first random access sequences in at least one direction.

In a possible implementation, the first random access sequence includes a first part of the first random access sequence and a second part of the first random access sequence; the indication information includes first indication information and second indication information; and the sending indication information to a terminal device includes: sending the first indication information and the second indication information to the terminal device, where the first indication information is indication information sent in a receive window for the first part of the first random access sequence, the second indication information is indication information sent in a receive window for the second part of the first random access sequence, the second indication information includes information about a third random access sequence, and the third random access sequence belongs to the first part of the first random access sequence.

In a possible implementation, the second indication information further includes information about a fourth random access sequence, and the fourth random access sequence belongs to the second part of the first random access sequence.

According to a third aspect, an embodiment of this application further provides a communication method, applied to a second network device. The method includes: receiving a first random access sequence from a terminal device; determining a fifth random access sequence; and sending information about the fifth random access sequence to a first network device, where the fifth random access sequence is a random access sequence detected in the first random access sequence or a random access sequence that is detected in the first random access sequence and that satisfies a first condition, and the first condition is that a signal strength is greater than or equal to a first threshold.

In this solution, the second network device may provide the information about the random access sequence for the first network device, so that in a random access process of the terminal device, the first network device may feed back the information about the random access sequence to the terminal device. Therefore, the terminal device has an opportunity to send an uplink signal in a directional and targeted manner based on the information, so that beam scanning overheads of the terminal device can be reduced, and beam correspondence between the terminal device and the network device can be implemented as soon as possible. In addition, a random access sequence with a strong signal strength is selected from the first random access sequence based on the first threshold, and scanning may be preferably performed in a direction in which a beam with the strong signal strength is located. This helps implement beam correspondence as soon as possible while minimizing system costs.

In a possible implementation, the second network device further sends a signal strength of the fifth random access sequence to the first network device.

In a possible implementation, the method further includes: receiving the first threshold from the first network device, where the first threshold is used to determine, from the first random access sequence, a fifth random access sequence that satisfies the first condition.

In a possible implementation, the method further includes: receiving configuration information of an uplink signal from the first network device, where the configuration information of the uplink signal includes a sending period of the uplink signal on a second frequency band, the sending period is used to send an uplink signal in a direction determined based on indication information, and the sending period is less than a sending period of another uplink signal sent by the terminal device to at least one second network device, thereby ensuring transmission reliability in the transmission direction determined based on the indication information.

In a possible implementation, the method further includes: receiving configuration information of the first random access sequence from the first network device, where the configuration information of the first random access sequence is used by the terminal device to send the first random access sequence to the at least one second network device, and the configuration information of the first random access sequence includes at least one of the following: a quantity of times for sending the first random access sequence in at least one direction, and an interval for sending the first random access sequences in at least one direction.

In a possible implementation, the method further includes: receiving the uplink signal from the terminal device in a direction of the fifth random access sequence or a direction associated with the fifth random access sequence; and sending identification information of the uplink signal to the first network device, where the identification information is information that is used for scheduling beam transmission on a terminal device side after beam correspondence is completed by the at least one second network device.

In a possible implementation, the receiving a first random access sequence from a terminal device includes: receiving the first random access sequence from the terminal device on the second frequency band, where a frequency of the second frequency band is higher than a frequency of a first frequency band, the first frequency band is a frequency band used by the first network device to send the indication information to the terminal device, the indication information includes information about a second random access sequence, the information about the second random access sequence includes at least one of configuration information, sequence information, resource information, or moment information of the second random access sequence, and the second random access sequence is included in the first random access sequence.

According to a fourth aspect, an embodiment of this application provides a communication apparatus. The apparatus includes a sending unit, configured to send a first random access sequence to at least one second network device; and a receiving unit, configured to receive indication information from a first network device or the at least one second network device, where the indication information includes information about a second random access sequence, the information about the second random access sequence includes at least one of configuration information, sequence information, resource information, or moment information of the second random access sequence, and the second random access sequence is included in the first random access sequence.

In a possible implementation, the apparatus further includes a processing unit. The processing unit is configured to: determine, based on the indication information, a direction of sending an uplink signal to the at least one second network device; and the sending unit is further configured to send the uplink signal to the at least one second network device, where the uplink signal includes a sounding reference signal, a demodulation reference signal, or a first uplink signal.

In a possible implementation, the second random access sequence is a random access sequence that is in the first random access sequence and that is detected by the at least one second network device or a random access sequence that is in the first random access sequence, that is detected by the at least one second network device and that satisfies a first condition, and the first condition is that a signal strength is greater than or equal to a first threshold.

In a possible implementation, there is an association relationship between the direction of sending the uplink signal to the at least one second network device and the information about the second random access sequence or a direction indicated by the information about the second random access sequence.

In a possible implementation, the indication information is a random access response message, and the indication information further includes a timing advance TA.

In a possible implementation, the receiving unit is further configured to receive the indication information from the first network device from a first frequency band; and the sending the uplink signal to the at least one second network device includes: sending the uplink signal to the at least one second network device on a second frequency band, where a frequency of the second frequency band is higher than a frequency of the first frequency band.

In a possible implementation, the receiving unit is further configured to receive configuration information of the uplink signal from the first network device, where the configuration information of the uplink signal includes a sending period of the uplink signal on the second frequency band, the sending period is used to send an uplink signal in the direction determined based on the indication information, and the sending period is less than a sending period of another uplink signal sent to the at least one second network device.

In a possible implementation, the sending unit is further configured to sequentially send the uplink signal based on an order of the information of the second random access sequence included in the indication information.

In a possible implementation, the receiving unit is further configured to obtain configuration information of the first random access sequence from the first network device, where the configuration information of the first random access sequence is information about the first random access sequence sent to the at least one second network device, and the configuration information about the first random access sequence includes at least one of the following: a quantity of times for sending the first random access sequence in at least one direction, and an interval for sending the first random access sequences in at least one direction.

In a possible implementation, the sending unit is further configured to: after sending the first random access sequence to the at least one second network device in a first quantity of directions based on the configuration information of the first random access sequence, start a receive window for the indication information, and receive the indication information in the receive window for the indication information, where the first quantity is an integer greater than or equal to 1.

In a possible implementation, the first random access sequence includes a first part of the first random access sequence and a second part of the first random access sequence; and second indication information includes information about a third random access sequence, the third random access sequence belongs to the first part of the first random access sequence, and the second indication information is received in a receive window for the second part of the first random access sequence.

In a possible implementation, the second indication information further includes information about a fourth random access sequence, and the fourth random access sequence belongs to the second part of the first random access sequence.

In a possible implementation, the apparatus further includes an ignoring unit. The ignoring unit is configured to: when the apparatus receives first indication information and receives the second indication information, ignore the information about the third random access sequence included in the second indication information; and the sending unit is further configured to: when the apparatus fails to receive the first indication information but receives the second indication information, send the uplink signal based on the second indication information, where the first indication information is received in a receive window for the first part of the first random access sequence.

The sending unit may be implemented by using a transmitter, the receiving unit may be implemented by using a receiver, and the processing unit may be implemented by using a processor. The apparatus may be a terminal device, or a chip or a chip system in the terminal device. If the apparatus is the terminal device, the transmitter and the receiver may be radio frequency transceiver components in the terminal device. If the apparatus is the chip or the chip system disposed in the terminal device, the transmitter and the receiver may be communication interfaces in the chip or the chip system. The communication interface is connected to radio frequency transceiver components in the terminal device, to implement information sending and receiving by using the radio frequency transceiver components.

According to a fifth aspect, an embodiment of this application provides a communication apparatus, configured in a first network device. The apparatus includes a sending unit, configured to send indication information to a terminal device, where the indication information includes information about f a second random access sequence, the second random access sequence belongs to a fifth random access sequence, and the information about the second random access sequence includes at least one of configuration information, sequence information, resource information, or moment information of the second random access sequence.

In a possible implementation, the apparatus further includes a receiving unit, configured to receive information about a fifth random access sequence from at least one second network device, where the second random access sequence belongs to the fifth random access sequence.

In a possible implementation, the fifth random access sequence is a random access sequence that is in a first random access sequence and that is detected by the at least one second network device or a random access sequence that is in a first random access sequence, that is detected by the at least one second network device and that satisfies a first condition, the first random access sequence is sent by the terminal device to the at least one second network device, and the first condition is that a signal strength is greater than or equal to a first threshold.

In a possible implementation, the apparatus further includes a processing unit. The receiving unit is further configured to receive a signal strength of the fifth random access sequence from the at least one second network device; and the processing unit is further configured to determine the second random access sequence from the fifth random access sequence based on the signal strength of the fifth random access sequence.

In a possible implementation, the processing unit is further configured to: sort signal strengths of the fifth random access sequence, and select fifth random access sequences corresponding to N highest signal strengths as the second random access sequence, where N is a positive integer greater than or equal to 1.

In a possible implementation, the first threshold is notified by the first network device to the at least one second network device.

In a possible implementation, the indication information is a random access response message, and the indication information further includes a timing advance TA.

In a possible implementation, the sending unit is further configured to send the indication information to the terminal device from a first frequency band, where a frequency of the first frequency band is lower than a frequency of a second frequency band, and the second frequency band is a frequency band used by the terminal device to send an uplink signal to the at least one second network device.

In a possible implementation, the sending unit is further configured to send configuration information of the uplink signal to the terminal device and/or the at least one second network device, where the configuration information of the uplink signal includes a sending period of the uplink signal on the second frequency band, the sending period is used to send an uplink signal in a direction determined based on the indication information, and the sending period is less than a sending period of another uplink signal sent by the terminal device to the at least one second network device.

In a possible implementation, the sending unit is further configured to send configuration information of the first random access sequence to the terminal device and/or the at least one second network device, where the configuration information of the first random access sequence is used by the terminal device to send the first random access sequence to the at least one second network device, and the configuration information of the first random access sequence includes at least one of the following: a quantity of times for sending the first random access sequence in at least one direction, and an interval for sending the first random access sequences in at least one direction.

In a possible implementation, the first random access sequence includes a first part of the first random access sequence and a second part of the first random access sequence; the indication information includes first indication information and second indication information; and the sending unit is further configured to send the first indication information and the second indication information to the terminal device, where the first indication information is indication information sent in a receive window for the first part of the first random access sequence, the second indication information is indication information sent in a receive window for the second part of the first random access sequence, the second indication information includes information about a third random access sequence, and the third random access sequence belongs to the first part of the first random access sequence.

In a possible implementation, the second indication information further includes information about a fourth random access sequence, and the fourth random access sequence belongs to the second part of the first random access sequence.

The sending unit may be implemented by using a transmitter, and the receiving unit may be implemented by using a receiver. The communication apparatus may be a network device, or a chip or a chip system in the network device. If the communication apparatus is the network device, the transmitter and the receiver may be radio frequency transceiver components in the network device. If the communication apparatus is the chip or the chip system disposed in the network device, the transmitter and the receiver may be communication interfaces in the chip or the chip system. The communication interface is connected to radio frequency transceiver components in the network device, to implement information sending and receiving by using the radio frequency transceiver components.

According to a sixth aspect, an embodiment of this application further provides a communication apparatus, configured in at least one second network device. The apparatus includes a receiving unit, configured to receive a first random access sequence from a terminal device; a processing unit, configured to determine a fifth random access sequence; and a sending unit, configured to send information about the fifth random access sequence to a first network device, where the fifth random access sequence is a random access sequence detected in the first random access sequence or a random access sequence that is detected in the first random access sequence and that satisfies a first condition, and the first condition is that a signal strength is greater than or equal to a first threshold. A random access sequence with a strong signal strength is selected from the first random access sequence based on the first threshold, and scanning may be preferably performed in a direction in which a beam with the strong signal strength is located. This helps implement beam correspondence as soon as possible while minimizing system costs.

The sending unit may be implemented by using a transmitter, and the receiving unit may be implemented by using a receiver. The communication apparatus may be a network device, or a chip or a chip system in the network device. If the communication apparatus is the network device, the transmitter and the receiver may be radio frequency transceiver components in the network device. If the communication apparatus is the chip or the chip system disposed in the network device, the transmitter and the receiver may be communication interfaces in the chip or the chip system. The communication interface is connected to radio frequency transceiver components in the network device, to implement information sending and receiving by using the radio frequency transceiver components.

In a possible implementation, the sending unit is further configured to send a signal strength of the fifth random access sequence to the first network device.

In a possible implementation, the receiving unit is further configured to receive the first threshold from the first network device, where the first threshold is used to determine, from the first random access sequence, a fifth random access sequence that satisfies the first condition.

In a possible implementation, the receiving unit is further configured to receive configuration information of an uplink signal from the first network device, where the configuration information of the uplink signal includes a sending period of the uplink signal on a second frequency band, the sending period is used to send an uplink signal in a direction determined based on indication information, and the sending period is less than a sending period of another uplink signal sent by the terminal device to at least one second network device, thereby ensuring transmission reliability in the transmission direction determined based on the indication information.

In a possible implementation, the receiving unit is further configured to obtain configuration information of the first random access sequence from the first network device, where the configuration information of the first random access sequence is used by the terminal device to send the first random access sequence to the at least one second network device, and the configuration information of the first random access sequence includes at least one of the following: a quantity of times for sending the first random access sequence in at least one direction, and an interval for sending the first random access sequences in at least one direction.

In a possible implementation, the receiving unit is further configured to receive the uplink signal from the terminal device in a direction of the fifth random access sequence or a direction associated with the fifth random access sequence; and the sending unit is further configured to send identification information of the uplink signal to the first network device, where the identification information is information that is used for scheduling beam transmission on a terminal device side after beam correspondence is completed by the at least one second network device.

In a possible implementation, the receiving unit is further configured to receive the first random access sequence from the terminal device on the second frequency band, where a frequency of the second frequency band is higher than a frequency of a first frequency band, the first frequency band is a frequency band used by the first network device to send the indication information to the terminal device, the indication information includes information about a second random access sequence, the information about the second random access sequence includes at least one of configuration information, sequence information, resource information, or moment information of the second random access sequence, and the second random access sequence is included in the first random access sequence.

According to a seventh aspect, an embodiment of this application provides a communication apparatus. The communication apparatus includes a processor and a storage medium, the storage medium stores instructions, and when the instructions are run by the processor, the method according to the first aspect and the possible implementations of the first aspect, the method according to the second aspect and the possible implementations of the second aspect, or the method according to the third aspect and the possible implementations of the third aspect is implemented. The communication apparatus may be a terminal device or a network device, or may be a chip or a chip system in the terminal device or the network device.

According to an eighth aspect, an embodiment of this application provides a computer program product. The computer program product includes instructions, and when the instructions are run by a processor, the method according to the first aspect and the possible implementations of the first aspect, the method according to the second aspect and the possible implementations of the second aspect, or the method according to the third aspect and the possible implementations of the third aspect is implemented.

According to a ninth aspect, an embodiment of this application provides a computer-readable storage medium. The computer-readable storage medium includes instructions, and when the instructions are run by a processor, the method according to the first aspect and the possible implementations of the first aspect, the method according to the second aspect and the possible implementations of the second aspect, or the method according to the third aspect and the possible implementations according to the third aspect is implemented.

In the solution provided in embodiments of this application, the first network device or the second network device may feed back, to the terminal device, the information about the random access sequence successfully detected by the second network device. In this way, the terminal device can send the uplink signal in the directional and targeted manner based on the information, so that beam scanning overheads of the terminal device can be reduced, and beam correspondence between the terminal device and the second network device can be implemented as soon as possible.

### BRIEF DESCRIPTION OF DRAWINGS

FIG. 1 is a schematic diagram of a scenario in which a millisecond wave is used for uplink capacity expansion;
FIG. 2 is a schematic diagram of beam scanning performed by a terminal device;
FIG. 3 is a schematic diagram of a network architecture according to an embodiment of this application;
FIG. 4A is a flowchart of a communication method according to an embodiment of this application;
FIG. 4B is a flowchart of a communication method according to an embodiment of this application;
FIG. 4C is a flowchart of a communication method according to an embodiment of this application;
FIG. 5A is a schematic diagram of random access sequence detection according to an embodiment of this application;
FIG. 5B is a schematic diagram of random access sequence detection according to an embodiment of this application;
FIG. 6A is a schematic diagram of indication information receiving according to an embodiment of this application;
FIG. 6B is a schematic diagram of indication information receiving according to an embodiment of this application;
FIG. 7 is a schematic diagram of information exchange between a terminal device and a network side;
FIG. 8 is a flowchart of a communication method according to an embodiment of this application;
FIG. 9 is a flowchart of a communication method according to an embodiment of this application;
FIG. 10 is a schematic diagram of a structure of a communication apparatus according to an embodiment of this application;
FIG. 11 is a schematic diagram of a structure of a communication apparatus according to an embodiment of this application;
FIG. 12 is a schematic diagram of a structure of a communication apparatus according to an embodiment of this application; and
FIG. 13 is a schematic diagram of a structure of a communication apparatus according to an embodiment of this application.

### DESCRIPTION OF EMBODIMENTS

To make objectives, technical solutions, and advantages of embodiments of this application clearer, the following describes specific implementations of embodiments of this application in detail with reference to accompanying drawings.

It should be noted that, a term "and/or" in this application describes only an association relationship between associated objects and indicates that three relationships may exist. For example, "A and/or B" may indicate the following three cases: Only A exists, both A and B exist, and only B exists. In addition, in this application, "at least one of..." or a similar expression thereof indicates any combination of listed items, and in the combination, each item may be singular or plural. For example, "at least one of A, B, and C" or "at least one of A, B, or C" may indicate the following six cases: Only A exists, both A and B exist, only B exists, both A and C exist, both B and C exist, A, B, and C all exist, and only C exists. In the specification and claims in embodiments of this application, terms "first", "second", and so on are intended to distinguish between different objects but do not indicate a particular order of the objects. For example, a first network device, a second network device, and the like are used to distinguish between different network devices, but are not used to describe a specific sequence of the target objects. In embodiments of this application, a word "example", "for example" or the like indicates giving an example, an illustration, or a description. Any embodiment or design scheme described by using "example" or "for example" in embodiments of this application shall not be construed as being more preferred or having more advantages than another embodiment or design scheme. Exactly, use of the words such as "example" or "for example" is intended to present a relative concept in a specific manner. In the description of embodiments of this application, unless otherwise stated, "a plurality of" means two or more.

Usually, when a network device and a terminal device communicate with each other by using a high-band wireless signal, the network device and the terminal device communicate with each other by using a narrow beam. Therefore, when a direction of sending a beam is aligned with a direction of receiving a beam, good communication quality is obtained between the network device and the terminal device. In this way, the beam between the network device and the terminal device needs to be managed, to align the direction of sending the beam with the direction of receiving the beam. There may be the following two beam management solutions.

Solution a: The network device may send beams in different directions. The terminal device may measure a signal on the beam, determine signal quality for the detected beam, and report a measurement result to the network device, so that the network device selects a direction of sending a beam based on the measurement result, to implement beam correspondence (beam correspondence, BC).

Solution b: The terminal device may send beams in different directions. The network device may measure a signal on the beam, determine signal quality for the detected beam, and adjust, based on a measurement result, a direction in which the terminal device sends a beam, to implement beam correspondence.

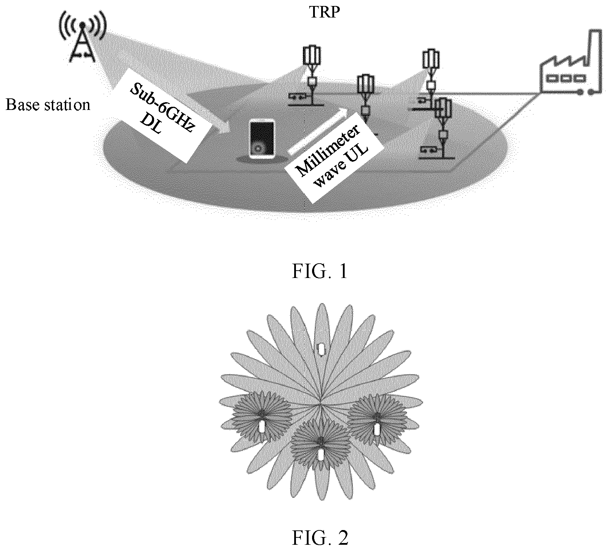

Considering a limitation of a spectrum resource, a 3rd generation partnership project (3rd generation partnership project, 3GPP) discusses introducing a millimeter wave (mmWave) as a supplementary uplink (supplementary UL, SUL), that is, using the millimeter wave for uplink capacity expansion and improving the uplink capacity by using a frequency raster 2 (frequency raster 2, FR2). Refer to FIG. 1. Considering that the millimeter wave is introduced to expand uplink capacity, slot configuration on the millimeter wave frequency band may be configured with only an uplink only (UL only) slot, or at least an uplink dominant (UL dominant) (that is, the uplink slot is dominant) slot. The uplink dominant means that in uplink-downlink time domain resource configuration, an uplink time domain resource accounts for a large proportion.

In an uplink dominant scenario, there is a shortage of a downlink slot. Therefore, if the beam correspondence is performed by using the solution a, a longer delay is caused, and it is more difficult to meet an actual requirement.

Similarly, in an uplink only (UL only) scenario, no downlink slot is configured. Therefore, in this scenario, it is difficult to perform the beam correspondence (beam correspondence, BC) by using the solution a.

In the uplink dominant scenario and the uplink only scenario, the solution b may be used to perform the beam correspondence based on an uplink beam. As shown in FIG. 2, in the solution b, if there is no direction reference, the terminal device needs to send beams in a large quantity of directions, which causes a large quantity of scanning overheads, increases power consumption of the terminal device, and may take a long time to implement the beam correspondence. Specifically, when a micro base station (for example, a transmission and reception point (transmission and reception point, TRP)) and a macro base station (for example, a next generation NodeB (next generation NodeB, gNB)) are at different sites, the terminal device needs to obtain a timing advance (timing advance, TA) on a corresponding path through uplink random access (random access, RA). After obtaining the TA, the terminal device sends an uplink signal based on the TA to implement uplink beam correspondence. Usually, when there is a downlink, the random access is initiated and performed based on an uplink beam associated with a synchronization signal block (SS block, SSB) detected on the downlink. In other words, when there is a downlink, the random access is performed based on an uplink sending occasion (occasion) associated with a synchronization signal block detected on the downlink. To be specific, the random access is performed based on the associated uplink sending occasion in a beam direction in which the synchronization signal block detected on the downlink is located, so that after the network device detects the synchronization signal block, a direction of a beam that the terminal device can align and receive can be learned of based on a correspondence between the synchronization signal block and the associated uplink sending occasion. The uplink sending occasion further corresponds to a beam of the network device. However, when there are fewer downlinks, the random access cannot be performed based on the SSB detection in a timely manner. Especially when there is no downlink, there is no reference beam for the random access of the terminal device, and the terminal device can only start sending a beam in a polling manner from any selected direction. As a result, the large quantity of scanning overheads may be caused, the power consumption of the device is increased, and the beam correspondence takes a long time.

Further, in a random access process, the terminal device may fail to decode an RAR in a monitoring window of a random access response (random access response, RAR). Reasons may be as follows: (1) The network device may fail to detect a random access preamble (random access preamble, RAP) in a physical random access channel (physical random access channel, PRACH), (2) the network device may fail to schedule transmission of related information of the RAR, or (3) there is interference on a downlink radio link. As a result, the terminal device fails to decode the RAR. In a scenario in which the millimeter wave is introduced as the supplementary uplink, the foregoing problem becomes more serious. If beams are not aligned, the network device may fail to detect the RAP. For RAPs sent by the terminal device in a plurality of directions, the base station may fail to schedule transmission of RARs for the plurality of beams of the terminal device in a timely manner. Therefore, when the millimeter wave is introduced as the supplementary uplink, it is very likely that the terminal device fails to receive the RAR.

For the foregoing problem, embodiments of this application provide a communication solution, where a terminal device may send a random access sequence to a network device. The network device may feed back information about the random access sequence to the terminal device. Therefore, the terminal device has an opportunity to perform uplink beam scanning based on the information, to send an uplink signal in a directional and targeted manner. This reduces beam scanning overheads of the terminal device and implements beam correspondence as soon as possible.

Next, in different embodiments, the communication solution provided in embodiments of this application is described by using examples.

The technical solutions in embodiments of this application may be applied to various communication systems. For example, the communication system may be a long term evolution (long term evolution, LTE) system, an LTE frequency division duplex (frequency division duplex, FDD) system, an LTE time division duplex (time division duplex, TDD) system, a 5th generation (5th generation, 5G) system, a new radio (new radio, NR) system, or a next generation communication system such as 6G. The 5G mobile communication system in embodiments of this application includes a non-standalone (non-standalone, NSA) 5G mobile communication system or a standalone (standalone, SA) 5G mobile communication system. The technical solutions provided in this application may be further applied to a future communication system, for example, a 6th generation mobile communication system. Alternatively, the communication system may be a public land mobile network (public land mobile network, PLMN) network, a device-to-device (device-to-device, D2D) communication system, a machine-to-machine (machine-to-machine, M2M) communication system, an internet of things (Internet of Things, IoT) communication system, an internet of vehicles communication system, or another communication system.

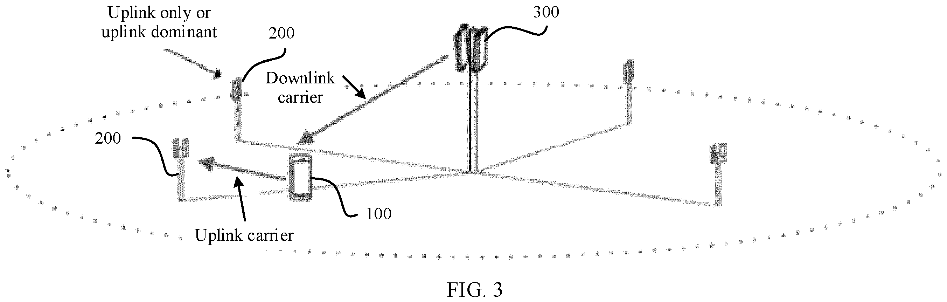

FIG. 3 shows a network architecture according to an embodiment of this application, including a terminal device 100, at least one network device 200, and a network device 300. The terminal device 100 may be located within coverage of both the network device 200 and the network device 300.

The terminal device 100 may be an access terminal, a subscriber unit, a subscriber station, a mobile station, a mobile console, a relay station, a remote station, a remote terminal, a mobile device, a user terminal (user terminal), user equipment (user equipment, UE), a terminal (terminal), a wireless communication device, a user agent, a user apparatus, a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal in a future 5G network, a terminal in a future evolved PLMN, a terminal in a future internet of vehicles, or the like. This is not limited in embodiments of this application.

The network device 200/the network device 300 may be any communication device that is configured to communicate with the terminal device 100 and has a wireless transceiver function. The network device 200/the network device 300 includes but is not limited to: an evolved NodeB (evolved NodeB, eNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. Alternatively, the network device 200/the network device 300 may be a gNB, a TRP, or a TP in a 5G system, or an antenna panel or a group of antenna panels (including a plurality of antenna panels) of a base station in a 5G system. In addition, the network device 200/the network device 300 may alternatively be a network node forming a gNB or a TP, for example, a BBU, a distributed unit (distributed unit, DU), or the like. The network device 200/the network device 300 may alternatively be a network device in a 5.5G or 6G system. A specific implementation of the network device 200/the network device 300 is not limited in this embodiment of this application.

The network device 200 and the network device 300 may be at different sites. Different sites may also be understood as being non-co-sited, that is, the network device 200 and the network device 300 are not located at a same site (co-site). The network device 200 may use a high frequency band (for example, a frequency band such as 28 GHz, 38 GHz, or 60 GHz) as a supplemental uplink. The at least one network device 200 may form an uplink ultra-dense network. The high frequency band herein may be any frequency band higher than 6 GHz. The any frequency band may include a millimeter wave frequency band. In other words, the network device 200 may introduce the millimeter wave frequency band as the supplementary uplink. The high frequency band may include at least one carrier (carrier), and these carriers may be an uplink only (UL only) carrier or an uplink dominant (UL dominant) carrier. Therefore, the terminal device 100 may send an uplink signal to the network device 200 by using these carriers.

When the network device 200 is in an uplink dominant case, the network device 200 may be a standalone (standalone) network device, that is, the network device 200 is not limited to a case in which the network device 200 coexists with the network device 300 at different sites.

The network device 300 may use a low frequency band, for example, a 700 MHz frequency band, an 800 MHz frequency band, a 1.6 GHz frequency band, a 1.9 GHz frequency band, a 2.1 GHz frequency band, or a 2.5 GHz frequency band. The low frequency band herein may be any frequency band lower than 6 GHz. The low frequency band may include at least one downlink carrier. Therefore, the network device 300 may send downlink information or signal to the terminal device 100 by using these downlink carriers. Alternatively, the low frequency band may include at least one uplink carrier. Therefore, the terminal device 100 may send the uplink information or signal to the network device 300 by using these uplink carriers.

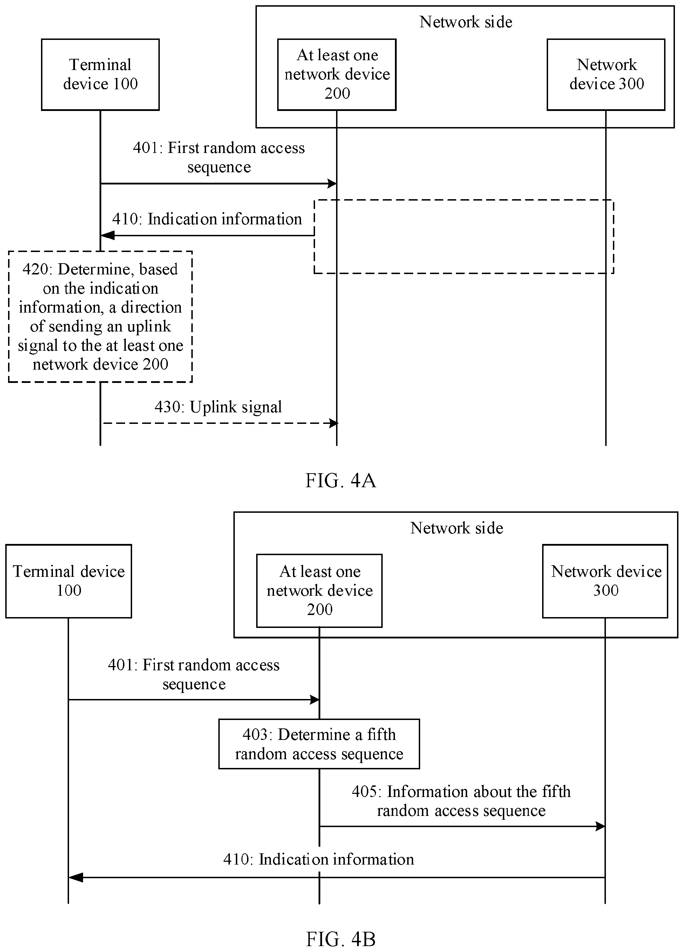

Based on the network architecture shown in FIG. 3, an embodiment of this application provides a communication method. Refer to FIG. 4A. The method may include the following steps.

Step 401: The terminal device 100 sends a first random access sequence to the at least one network device 200.

In some embodiments, the first random access sequence may be a random access preamble (random access preamble, RAP) of a preset type. The RAP of the preset type is a grouped sequence and/or resource, and may be dedicated to a random access channel (random access channel, RACH) of a preset type.

The terminal device 100 may send the first random access sequence to the at least one network device 200 by using a beam having a first beam width. The beam having the first beam width is a wide beam. The wide beam may mean that a beam width (beam width) is greater than a preset value. More specifically, the wide beam may mean that an included angle between two half-power points of the beam is greater than a preset angle value. For example, the first beam width may be configured by the network device 300 for the terminal device 100.

In some embodiments, the terminal device 100 may send the first random access sequence to the at least one network device 200 based on a preset power. For example, when a millimeter wave frequency band is introduced as a supplementary uplink, the preset power may be a power upper limit for satisfying millimeter wave coverage. The power upper limit may be obtained through calculation based on a target power value and a path loss corresponding to a coverage area of the millimeter wave beam. For details, refer to descriptions in the conventional technology. Details are not described herein again. A channel changes rapidly in a millimeter wave system. Therefore, a long delay is caused from sending the first random access sequence on the millimeter wave beam to detecting no random access response (random access response, RAR) in a feedback window to power ramping (power ramping), and impact caused by movement of the terminal device 100 cannot be effectively captured. Therefore, a maximum transmit power value of the first random access sequence is conservatively set, to reduce the delay required for beam correspondence.

In some embodiments, before step 401 is performed, the network device 300 may send configuration information of the first random access sequence to the terminal device 100. For example, the network device 300 may send the configuration information of the first random access sequence to the terminal device 100 by using a carrier of a low frequency band. The configuration information of the first random access sequence is information about the first random access sequence sent to the at least one network device 200. The configuration information may indicate a sending rule or a preamble pattern (preamble pattern) of the first random access sequence.

In an illustrative example of these embodiments, the configuration information of the first random access sequence may include a quantity of times for sending the first random access sequence in at least one direction, to indicate whether the terminal device 100 repeatedly sends the first random access sequence to the at least one network device 200 in the at least one direction. In other words, the terminal device 100 may repeatedly send the first random access sequence in the at least one direction. A quantity of repetitions may be configured by the network device 300, and the first random access sequence is sent to the terminal device 100 based on the configuration information of the first random access sequence.

In another illustrative example of these embodiments, the configuration information of the first random access sequence may include an interval t1 for sending the first random access sequence in at least one direction. In other words, the terminal device 100 may send the first random access sequence for one or more times at the interval t1 in each direction of the at least one direction. Alternatively, after sending the first random access sequence in a first direction of the at least one direction for one or more times, the terminal device 100 may send the first random access sequence in a second direction of the at least one direction for one or more times after the interval t1.

In still another illustrative example of these embodiments, the configuration information of the first random access sequence may include a first rule for sending the first random access sequence in at least one direction. In an example, the first rule indicates the terminal device 100 to sequentially send the first random access sequences in different directions in the at least one direction, and an interval for sending the first random access sequences may be fixed or may be variable. For example, after the first random access sequence is sent in a first direction in the at least one direction, the first random access sequence may be sent in a second direction in the at least one direction after an interval t1, and the first random access sequence is sent in a third direction in the at least one direction after an interval t2. t1 may be equal to t2, t1 may be greater than t2, or t1 may be less than t2. A relationship between t1 and t2 may be defined by the network device 300 or may be predefined in the terminal device 100. In other words, the terminal device 100 performs sending in beam directions according to a specific interval format. Quantity of times of repeated sending in the beam directions may be the same or may have a specific rule. In an example, the quantities of times of repeated sending may be in ascending order. To be specific, a quantity of times for repeatedly sending first few beams is less than a quantity of times for repeatedly sending beams after the first few beams. The same rule applies to the rest. An interval format of the specific format may be a non-uniform interval pattern. In another example, the quantities of times of repeated sending may be in ascending order. To be specific, the UE repeatedly performs sending in sequence in an initial beam direction at the interval t1, repeatedly performs sending in sequence in a beam direction after the initial beam direction at the interval t2, and so on. t1 may be equal to t2, t1 may be greater than t2, or t1 may be less than t2. The rule and the pattern may be defined or predefined by the network device 300. If the initial prediction direction is accurate, a pattern in which the quantities of times of repeated sending are in ascending order may be used, to reduce power consumption required for sending on the beam in a polling manner, identify a successfully detected beam direction as soon as possible, and achieve a tradeoff between the energy consumption and the delay.

t1, t2, or t3 is an integer greater than or equal to 0. A unit of t1, t2, or t3 is a time domain resource unit. In this application, the time domain resource may be at least one of a slot (slot), a subframe (subframe), a mini-slot (mini-slot), a mini-subframe (mini-subframe), or an OFDM symbol (symbol).

In some embodiments, the network device 300 may send the configuration information of the first random access sequence to the terminal device 100 by using the low frequency band.

In some embodiments, the at least one network device 200 may send the configuration information of the first random access sequence to the terminal device 100.

In some embodiments, step 401 includes: after the first random access sequence is sent to the at least one network device 200 in a first quantity of directions based on the configuration information of the first random access sequence, starting a receive window for indication information, and receiving the indication information in the receive window, where the first quantity is an integer greater than or equal to 1.

In other words, each time after sending the first random access sequence, the terminal device 100 may start a random access response window corresponding to the first random access sequence, to receive the RAR corresponding to the first random access sequence.

In some embodiments, the terminal device 100 may record a correspondence between the information about the first random access sequence and a sending direction. The information may include at least one of the configuration information, sequence information, resource information, or moment information of the first random access sequence. The sending direction is a direction in which the terminal device 100 sends the first random access sequence. To be specific, the terminal device 100 sends the first random access sequence to the at least one network device 200 in the sending direction.

Still refer to FIG. 4A. The terminal device 100 may perform step 410, to receive the indication information from the network device 300 or the at least one network device 200. In other words, the indication information may be sent by the network device 300 to the terminal device 100, or may be sent by the at least one network device 200 to the terminal device 100. The following describes the details based on different cases.

Refer to FIG. 4B. The at least one network device 200 may perform step 403, to determine a fifth random access sequence.

In an illustrative example, the at least one network device 200 may perform a random access sequence detection operation and determine a detected random access sequence included in the first random access sequence as the fifth random access sequence.

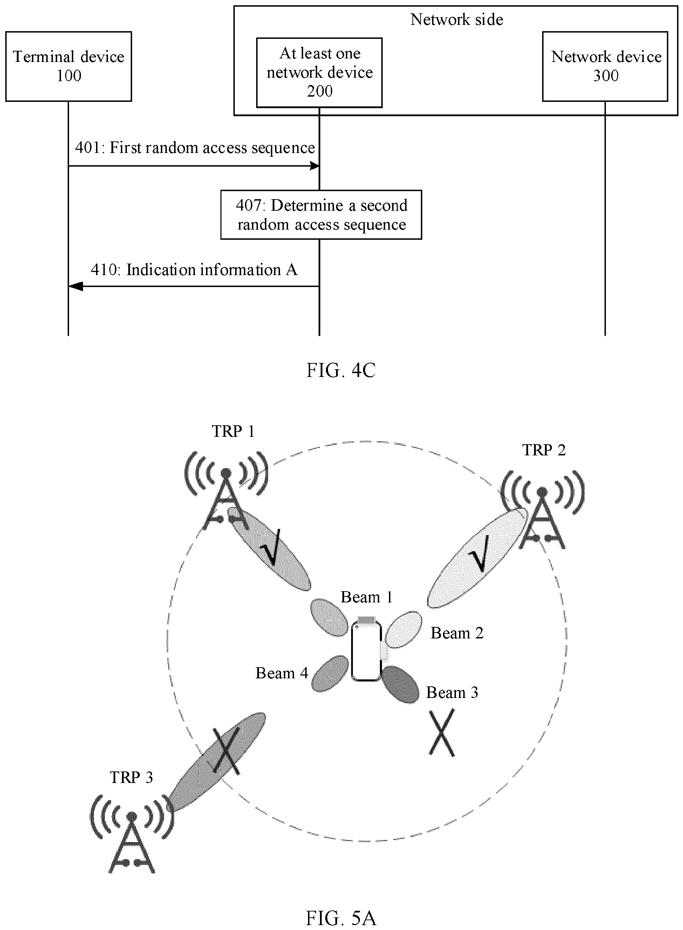

In an illustrative example, the at least one network device 200 may receive the configuration information of the first random access sequence from the network device 300. The configuration information of the first random access sequence is used by the terminal device 100 to send the first random access sequence to the at least one second network device 200, and the configuration information of the first random access sequence includes at least one of the following: the quantity of times for sending the first random access sequence in the at least one direction, and the interval for sending the first random access sequences in the at least one direction. For the configuration information of the first random access sequence, refer to the foregoing description of step 401 in FIG. 4. Details are not described herein again. The at least one network device 200 may determine, based on the configuration information of the first random access sequence, whether the random access sequence detected by the at least one network device 200 belongs to the first random access sequence.

In an illustrative example, the at least one network device 200 may perform the random access sequence detection operation and when the random access sequence is detected, determine whether the detected random access sequence satisfies a first condition. If the detected random access sequence satisfies the first condition and is included in the first random access sequence, the detected random access sequence may be determined as the fifth random access sequence. For a solution for determining whether a random access sequence belongs to the first random access sequence, refer to the foregoing description. Details are not described herein again.

In an example of this example, the network device 300 may send a first threshold to the at least one network device 200. The first threshold may be a preset value. In an example, the first threshold may be a signal strength threshold. The first threshold is used to determine, from the first random access sequence, a fifth random access sequence that satisfies the first condition. Specifically, the at least one network device 200 may determine whether a signal strength of the random access sequence detected by the at least one network device 200 is greater than or equal to the first threshold. If the signal strength of the detected random access sequence is greater than or equal to the first threshold and is included in the first random access sequence, the detected random access sequence may be determined as the fifth random access sequence.

In an example, the signal strength of the random access sequence may be specifically a received signal strength indicator (received signal strength indicator, RSSI), a reference signal received power (Reference Signal Received Power, RSRP), or a signal to interference plus noise ratio (Signal to Interference plus Noise Ratio, SINR).

Refer to FIG. 5A. The at least one network device 200 may include a plurality of network devices such as a TRP 1, a TRP 2, and a TRP 3. The first random access sequence sent by the terminal device 100 may include a random access sequence sent by using a beam 1, a random access sequence sent by using a beam 2, a random access sequence sent by using a beam 3, and a random access sequence sent by using a beam 4. As shown in FIG. 5A, the random access sequence sent by using the beam 1 may be detected by the TRP 1, and the random access sequence sent by using the beam 2 may be detected by the TRP 2. However, the random access sequence sent by using the beam 3 and the random access sequence sent by using the beam 4 are not detected by the at least one network device 200. In other words, in a scenario shown in FIG. 5A, the at least one network device 200 successfully detects a random access sequence sent by using a beam A and a random access sequence sent by using a beam B that are in the first random access sequence. The at least one network device 200 may determine the fifth random access sequence based on the random access sequence sent by using the beam A and the random access sequence sent by using the beam B.

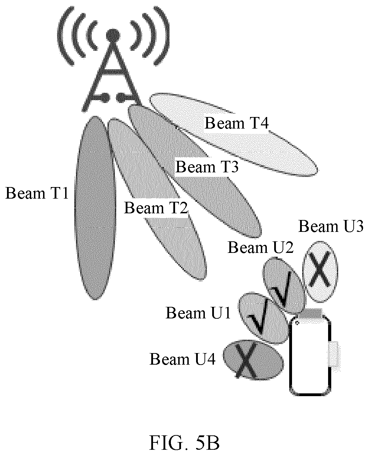

Refer to FIG. 5B. The first random access sequence includes a random access sequence sent by using a beam U1, a random access sequence sent by using a beam U2, a random access sequence sent by using a beam U3, and a random access sequence sent by using a beam U4 by the terminal device 100. The at least one network device 200 detects the random access sequence sent by using the beam U1 and the random access sequence sent by using the beam U2, and determines the random access sequence sent by using the beam U1 and the random access sequence sent by using the beam U2 as the fifth random access sequences.

Return to FIG. 4B. The at least one network device 200 may further perform step 405, to send information about the fifth random access sequence to the network device 300. The information about the fifth random access sequence may include at least one of configuration information, sequence information, resource information, or moment information of the fifth random access sequence.

In an illustrative example, the at least one network device 200 may further send a signal strength of the fifth random access sequence to the network device 300. The signal strength of the fifth random access sequence is a signal strength detected by the at least one network device 200.

The fifth random access sequence may include a plurality of random access sequences. The network device 200 may determine a second random access sequence from the fifth random access sequence based on the signal strength of the fifth random access sequence. In an example, signal strengths of the fifth random access sequences may be sorted, and fifth random access sequences corresponding to N highest signal strengths are selected as the second random access sequences, where N is a positive integer greater than or equal to 1.

In an illustrative example, information may be exchanged between the at least one network device 200 and the network device 300 through an X2 or Xn interface.

The network device 300 may perform step 410, to send the indication information to the terminal device 100. The indication information includes information about the second random access sequence, the information about the second random access sequence includes at least one of configuration information, sequence information, resource information, or moment information of the second random access sequence, and the second random access sequence is included in the first random access sequence.

After determining the second random access sequence from the fifth random access sequence, the network device 300 may include the information about the second random access sequence in the indication information and send the indication information to the terminal device 100.

In an illustrative example, the network device 300 may further include, in the indication information, a timing advance corresponding to the second random access sequence.

In an illustrative example, the second random access sequence includes a plurality of random access sequences, and the network device 300 may sort information about the plurality of random access sequences based on signal strengths of the plurality of random access sequences, to obtain an order of the information of the second random access sequences and include the order of the information of the second random access sequences in the indication information. The order of the information of the second random access sequences may be implicit indication information. For example, when the indication information is a medium access control element (medium access control element, MAC CE), the order of the information of the second random access sequences is an order of information elements (Information element, IE) that are sequentially arranged from front to back in the MAC CE.

In an illustrative example, the network device 300 may send the indication information to the terminal device 100 on a second frequency band. A frequency of a first frequency band is lower than a frequency of the second frequency band. The second frequency band is a frequency band used by the terminal device 100 to send the first random access sequence to the at least one network device 200.

In the foregoing manner, the network device 300 may send the indication information to the terminal device 100.

With reference to FIG. 4C, the following describes a solution in which the at least one network device 200 sends the indication information to the terminal device 100.

Refer to FIG. 4C. The at least one network device 200 may perform step 407, to determine the second random access sequence.

In an illustrative example, the at least one network device 200 may perform the random access sequence detection operation and determine a detected random access sequence included in the first random access sequence as the second random access sequence.

In an illustrative example, the at least one network device 200 may perform the random access sequence detection operation and when the random access sequence is detected, determine whether the detected random access sequence satisfies the first condition. If the detected random access sequence satisfies the first condition and is included in the first random access sequence, the detected random access sequence may be determined as the second random access sequence. In an example, the first condition is that the signal strength is greater than or equal to the first threshold. The first threshold may be received by the at least one network device 200 from the network device 300. In an example, the first threshold may be the signal strength threshold. The at least one network device 200 may determine whether a signal strength of the random access sequence detected by the at least one network device 200 is greater than or equal to the first threshold. If the signal strength of the detected random access sequence is greater than or equal to the first threshold and is included in the first random access sequence, the detected random access sequence may be determined as the second random access sequence.

The at least one network device 200 may include the information about the second random access sequence in the indication information, and the information about the second random access sequence includes at least one of the configuration information, the sequence information, the resource information, or the moment information of the second random access sequence. When there is a downlink resource between the at least one network device 200 and the terminal device 100, the at least one network device 200 may perform step 410, to send the indication information to the terminal device 100. The downlink resource is a downlink time domain resource on any carrier.

With reference to FIG. 4B and FIG. 4C, the foregoing describes a process in which the network device 300 or the at least one network device 200 sends the indication information to the terminal device 100. The following describes the indication information.

In some embodiments, the first random access sequence includes a first part of the first random access sequence and a second part of the first random access sequence; and second indication information includes information about a third random access sequence, the third random access sequence belongs to the first part of the first random access sequence, and the second indication information is received in a receive window for the second part of the first random access sequence. The third random access sequence is a random access sequence successfully detected in the first part of first random access sequence.

As described above, in step 401, after the first random access sequence is sent to the at least one network device 200 in the first quantity of directions based on the configuration information of the first random access sequence, the receive window for the indication information is started, and the indication information is received in the receive window for the indication information, where the first quantity is an integer greater than or equal to 1. In other words, after the first part of the first random access sequence is sent to the at least one network device 200, a receive window for the first part of the first random access sequence may be started. After the second part of the first random access sequence is sent to the at least one network device 200, the receive window for the second part of the first random access sequence may be started.

Specifically, after the first part of the first random access sequence is sent to the at least one network device 200 in the first quantity of directions, a receive window for indication information of the first part of the first random access sequence is started, and first indication information is received in the receive window for the indication information of the first part of the first random access sequence. The first indication information includes information about the detected random access sequence in the first part of the first random access sequence. The first part of the first random access sequence is all first random access sequences sent in the first quantity of directions. When the first quantity is 1, the first part of the first random access sequence is one random access sequence sent in the first direction or random access sequences that are of a configured quantity and that are sent in the first direction. When the first quantity is X, the first part of the first random access sequence is X random access sequences sent in the first direction to an X^{th} direction or X times random access sequences that are of a configured quantity and that are sent in the first direction to an X^{th} direction. The receive window for the indication information of the first part of the first random access sequence may be referred to as a first receive window.

After the second part of the first random access sequence is sent to the at least one network device 200 in the first quantity of directions, a receive window for indication information of the second part of the first random access sequence is started, and the second indication information is received in the receive window for the indication information of the second part of the first random access sequence. The second indication information at least includes information about a detected random access sequence in the second part of the first random access sequence. Alternatively, the second indication information at least includes the information about the detected random access sequence in the first part of the first random access sequence. The second indication information further includes the information about the detected random access sequence in the second part of the first random access sequence. The second part of the first random access sequence is all first random access sequences sent in the first quantity of directions. When the first quantity is 1, the first part of the first random access sequence is one random access sequence sent in the second direction or random access sequences that are of a configured quantity and that are sent in the second direction. When the first quantity is X, the first part of the first random access sequence is X random access sequences sent in an (X + 1)^{th} to a 2X^{th} direction or X times random access sequences that are of a configured quantity and that are sent in an (X + 1)^{th} to a 2X^{th} direction. The receive window for the indication information of the second part of the first random access sequence may be referred to as a second receive window.

In this embodiment of this application, "for" may be understood as "responding to".

It should be understood that the first part of the first random access sequence is not a part of the first random access sequence. The first part of the first random access sequence is a complete sequence. The first part of the first random access sequence is a part of all first random access sequences sent on different time domain resources, at different moments, or in different directions.

In some embodiments, after the first random access sequence is sent to the at least one network device 200 in the first quantity of directions based on the configuration information of the first random access sequence, the receive window for the indication information is started. A moment at which the receive window for the indication information is started may be a first offset moment starting from an end moment of sending the first random access sequence to the at least one network device 200 in the first quantity of directions. The first offset is configured by the network device for random access of a preset type.

The terminal may send the second part of the first random access sequence to the at least one network device 200 in the first quantity of directions, may send the second part of the first random access sequence in the first receive window, or may send the second part after the first receive window ends. Specifically, sending in the first receive window may be sending at a specific moment in the first receive window, for example, sending at a second offset moment away from a start moment of the first receive window, or sending at a third offset moment away from an end moment of sending the second part of the first random access sequence. The third offset is greater than the first offset. Specifically, sending after the first receive window ends may be sending at an end moment of the first receive window, or sending at a fourth offset moment away from the end moment of the first receive window.

The preset type is different from random access in an existing system. The random access of the preset type is a two-step random access sequence. The first random access sequence is a sequence used for the random access of the preset type. The first random access sequence is a grouped sequence. For the first random access sequence of the preset type, the terminal device performs corresponding sending according to step 401 and receives corresponding indication information.

In this embodiment of this application, the first offset, the second offset, the third offset, and the fourth offset are configured by the network device 300. In this application, a moment for sending the second part of the first random access sequence may be predefined or configured by the network device 300.

In this application, any configuration information may be configured by using at least one of RRC signaling, MAC signaling, or physical layer signaling, and typically, the configuration information is sent to the terminal device 100 by using the RRC signaling.

The following case may occur: Even if the third random access sequence in the first part of random access sequences is successfully detected by the network device 200, due to a factor such as a network delay or a scheduling delay on a network side, no information about the third random access sequence is received in the receive window for the indication information of the first part of the first random access sequence.

In this embodiment of this application, information about an M* random access sequence may be understood as response information for the M^{th} random access sequence, where m is any positive integer.

In the solution of this embodiment, the information about the third random access sequence is included in the indication information that corresponds to the second part of the first random access sequence and that is received in the receive window for the second part of the first random access sequence. In this way, the terminal device 100 receives the information about the third random access sequence in the receive window for the second part of the first random access sequence, thereby avoiding problems such as missed detection and a failure in transmission of the previous random access response RAR message. This improves reliability of random access response RAR message notification, reduces a decoding failure rate of the random access response RAR message, and accelerates uplink beam correspondence of the terminal device.

The indication information corresponding to the second part of the first random access sequence may be understood as response information for the second part of the first random access sequence.

In this application, the indication information may alternatively be understood as feedback information or response information.

In an illustrative example of these embodiments, the second indication information further includes information about a fourth random access sequence, and the fourth random access sequence belongs to the second part of the first random access sequence. The fourth random access sequence is the random access sequence successfully detected in the second part of first random access sequence.

Specifically, the fourth random access sequence in the second part of the first random access sequence is detected by the at least one network device 200, and the information about the fourth random access sequence may be included in the indication information and sent to the terminal device 100. The terminal device 100 may further receive the information about the fourth random access sequence in the receive window for the second part of the first random access sequence.

In an illustrative example of these embodiments, the method further includes: defining behavior when the terminal device receives the first indication information and the second indication information, and/or defining behavior when the terminal device fails to receive the first indication information but receives the second indication information. The first indication information is received in the receive window for the first part of the first random access sequence. Specifically, when the terminal device receives the first indication information and receives the second indication information, the terminal device sends the uplink signal based on the first indication information and the second indication information. That the terminal device sends the uplink signal based on the first indication information and the second indication information includes: The terminal device ignores the information about the third random access sequence included in the second indication information. When the terminal device fails to receive the first indication information but receives the second indication information, the terminal device sends the uplink signal based on the second indication information. That the terminal device sends the uplink signal based on the second indication information includes: The terminal device sends the uplink signal in a corresponding direction based on the information about the third random access sequence included in the second indication information. For the corresponding direction, refer to the following description of the embodiment shown in step 420 in FIG. 4A. Details are not described herein. In this example, the first indication information includes the information about the third random access sequence. If the terminal device 100 receives the first indication information in the receive window for the first part of the first random access sequence, the terminal device 100 receives the information about the third random sequence in the receive window for the first part of the first random access sequence. In this way, the terminal device may ignore the information about the third random access sequence included in the second indication information. If the terminal device 100 does not receive the first indication information in the receive window for the first part of the first random access sequence, it indicates that the terminal device 100 does not receive the information about the third random sequence in the receive window for the first part of the first random access sequence. In this way, the terminal device may send the uplink signal based on the information about the random access sequence included in the second indication information.

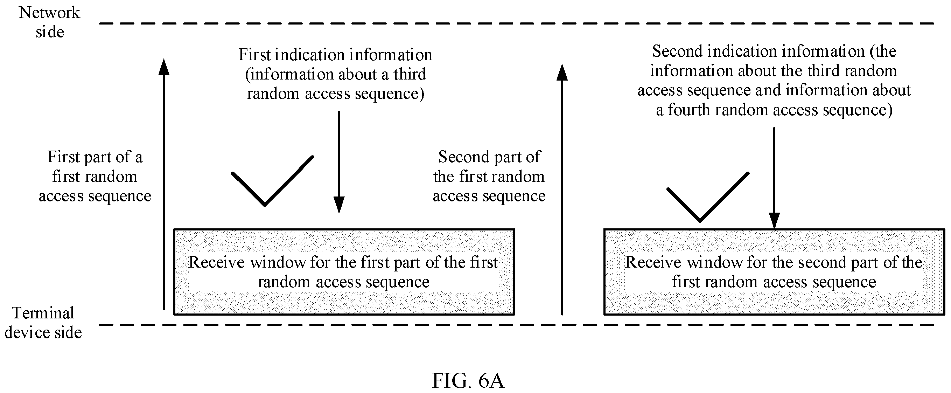

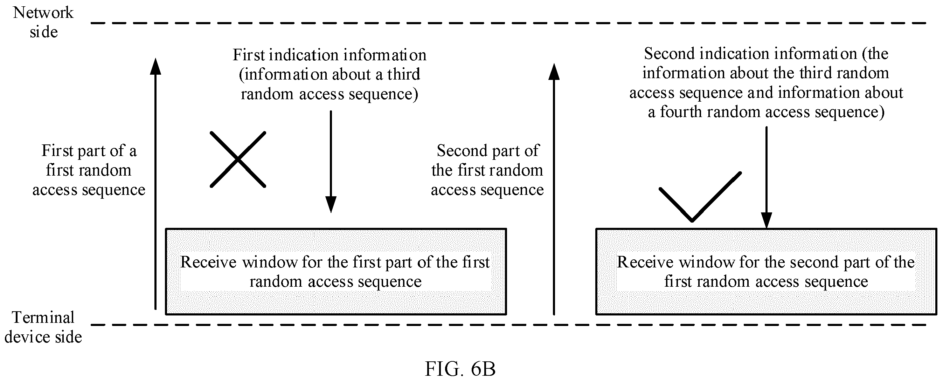

In an example, the solution of this embodiment is described by using an example with reference to FIG. 6A and FIG. 6B.

Refer to FIG. 6A. The terminal device 100 may send the first part of the first random access sequence to the at least one network device 200 and then start the receive window for the first part of the first random access sequence, to receive the first indication information in the receive window for the first part of the first random access sequence, and the first indication information includes the information about the third random sequence. The terminal device 100 may send the second part of the first random access sequence to the at least one network device 200 and then start the receive window for the second part of the first random access sequence, to receive the second indication information in the receive window for the second part of the first random access sequence, and the second indication information includes the information about the third random sequence and the information about the fourth random sequence. In this case, the terminal device 100 ignores the information about the third random access sequence in the second indication information.

Refer to FIG. 6B. The terminal device 100 may send the first part of the first random access sequence to the at least one network device 200 and then start the receive window for the first part of the first random access sequence, and the terminal device 100 does not receive the first indication information in the receive window for the first part of the first random access sequence. The terminal device 100 may send the second part of the first random access sequence to the at least one network device 200 and then start the receive window for the second part of the first random access sequence, to receive the second indication information in the receive window for the second part of the first random access sequence, and the second indication information includes the information about the third random sequence and the information about the fourth random sequence. In this case, the terminal device 100 sends the uplink signal based on the information about the third random access sequence and the information about the fourth random access sequence in the second indication information.

The foregoing uses an example to describe a solution in which the terminal device 100 receives the indication information. The following describes a solution in which the terminal device 100 sends the uplink signal based on the indication information.

Return to FIG. 4A. The terminal device 100 may perform step 420 to determine, based on the indication information, a direction of sending the uplink signal to the at least one second network device 200. The information about the second random access sequence may indicate the direction in which the terminal device sends the uplink signal.

In any description or embodiment of this application, the "direction" may also be understood as a "beam", a "beam direction", or an "antenna" and an "antenna port".

In some embodiments, there is an association relationship between the direction of sending the uplink signal to the at least one second network device and the information about the second random access sequence or a direction indicated by the information about the second random access sequence.

A first uplink signal may be a sequence with a cyclic prefix (cyclic prefix, CP) at a front end or a remote interference management (remote interference management, RIM) signal. For example, the first signal may be a channel state information reference signal (channel state information reference signal, CSI-RS) or may be a newly defined signal. In an example, a resource for carrying the first uplink signal includes M orthogonal frequency division multiplexing (orthogonal frequency division multiplexing, OFDM) symbols in time domain, and each symbol carries a same first signal. X CPs are added before (or at a very front end) the M OFDM symbols, where M is a positive integer, and X ≥ 1. In an example, the newly defined signal may be an RIM-like signal.

As described above, the terminal device 100 records the correspondence between the information about the first random access sequence and the sending direction. The first random access sequence includes the second random access sequence, that is, the terminal device 100 records a correspondence between the information about the second random access sequence and the sending direction. Therefore, after receiving the information about the second random access sequence, the terminal device 100 may determine, based on the information about the second random access sequence, the direction indicated by the information about the second random access sequence, and may further determine, based on a direction of the second random access sequence, the direction of sending the uplink signal to the at least one second network device 200.

In an example, the direction indicated by the information about the second random access sequence may be determined as the direction of sending the uplink signal to the at least one second network device. In another example, a beam direction adjacent to the direction indicated by the information about the second random access sequence may be determined as the direction of sending the uplink signal to the at least one second network device. In still another example, the direction indicated by the information about the second random access sequence and the beam direction adjacent to the direction indicated by the information about the second random access sequence may be determined as the direction of sending the uplink signal to the at least one second network device.

The terminal device 100 may perform step 430 to send the uplink signal to the at least one second network device 200. In an example, the uplink signal may be a sounding reference signal (sounding reference signal, SRS). In another example, the uplink signal may be a demodulation reference signal (demodulation reference signal, DMRS). In still another example, the uplink signal may be the first uplink signal.

In some embodiments, the terminal device 100 may send the uplink signal to the at least one network device 200 by using a beam of a second beam width. For example, the second beam width may be less than the first beam width. The second beam width may be configured by the network device.

In some implementations, the sending the uplink signal to the at least one second network device includes: sequentially sending the uplink signal based on the order of the information of the second random access sequences included in the indication information.

As described above, the second random access sequence may include the plurality of random access sequences, and the network device 300 may sort the information about the plurality of random access sequences based on the signal strengths of the plurality of random access sequences, to obtain the order of the information of the second random access sequences and include the order of the information of the second random access sequences in the indication information. The uplink signal is sent based on the order of the information of the second random access sequences. Therefore, scanning may be preferably performed in a direction with an optimal signal strength, and the beam correspondence can be implemented as soon as possible while scanning overheads are reduced.

In some embodiments, the second random access sequence may include the plurality of random access sequences. The indication information received by the terminal device 100 may include the signal strengths of the plurality of random access sequences. The terminal device 100 may sort the information about the plurality of random access sequences based on the signal strengths of the plurality of random access sequences, to obtain the order of the information of the second random access sequences. In the order of the information of the second random access sequences, the terminal device may select N random access sequences with highest signal strengths based on the signal strengths of the random access sequences in descending order and send the uplink signal based on the N random access sequences with the highest signal strengths. N is an integer greater than or equal to 1. For example, the second random access sequence herein may be the fifth random access sequence in the embodiment shown in FIG. 4B.

For example, the uplink signal may be sequentially sent based on the signal strengths of the N random access sequences that are sorted in descending order. Therefore, the scanning may be preferably performed in the direction with the optimal signal strength, and the beam correspondence can be implemented as soon as possible while the scanning overheads are reduced.

In some embodiments, the terminal device 100 may receive configuration information of the uplink signal from the network device 300. The configuration information of the uplink signal includes a sending period of the uplink signal on the second frequency band, the sending period is used by the terminal device 100 to send the uplink signal in the direction determined based on the indication information, and the sending period is less than a sending period of another uplink signal sent by the terminal device 100 to the at least one second network device 200. The direction determined based on the indication information is the direction that is determined above and that is for sending the uplink signal to the at least one second network device.

The network device 300 may configure the sending period of the uplink signal for the direction determined based on the indication information, so that the sending period is less than a reference period. The reference period is the sending period of another uplink signal sent by the terminal device 100 to the at least one second network device 200. In an example, the sending period of the uplink signal configured for the direction determined based on the indication information may be the reference period minus a preset offset.

In some embodiments, the at least one network device 200 may receive the configuration information of the uplink signal from the network device 300. The configuration information of the uplink signal includes the sending period of the uplink signal on the second frequency band, the sending period is used by the terminal device 100 to send the uplink signal in the direction determined based on the indication information, and the sending period is less than the sending period of another uplink signal sent by the terminal device 100 to the at least one second network device 200. The direction determined based on the indication information is the direction that is determined above and that is for sending the uplink signal to the at least one second network device.

In some embodiments, after receiving the configuration information of the uplink signal from the network device 300, the at least one network device 200 may send the configuration information to the terminal device 100. In other words, the network device 300 may indirectly send the configuration information to the terminal device 100 through the at least one network device 200.

In this way, the at least one network device 200 may obtain a period within which the terminal device 100 sends the uplink signal in the direction determined based on the indication information, to monitor the uplink signal in the direction determined based on the indication information.

In some embodiments, the at least one network device 200 may receive the uplink signal from the terminal device 100 in a direction of a fifth random access sequence or a direction associated with the fifth random access sequence; and send identification information of the uplink signal to the network device 300, where the identification information is information that is used for scheduling beam transmission on a terminal device side after the beam correspondence is completed by the at least one second network device. The identification information of the uplink signal includes at least one of sequence identification information, resource identification information, resource set identification information, or moment identification information of the uplink signal.

Refer to the foregoing description of the embodiment shown in FIG. 4B. The fifth random access sequence is detected by the at least one network device 200 and is included in the first random access sequence. The at least one network device 200 determines the second random access sequence from the fifth random access sequence, includes the information about the second random access sequence in the indication information, and sends the indication information to the terminal device 100. The terminal device 100 may send the uplink signal to the at least one network device 200 in the direction (that is, the direction of the second random access sequence or a direction associated with the second random access sequence) determined based on the indication information. The direction of the fifth random access sequence or the direction associated with the fifth random access sequence includes the direction of the second random access sequence or the direction associated with the second random access sequence. The at least one network device 200 may receive the uplink signal of the terminal device 100 in the direction of the fifth random access sequence or the direction associated with the fifth random access sequence.

The at least one network device 200 may perform a beam correspondence operation based on the received uplink signal. After the beam correspondence is completed, the identification information may be generated. The identification information is information that is used for scheduling the beam transmission on the terminal device side after the beam correspondence is completed by the at least one network device 200. The at least one network device 200 may send the identification information to the network device 300, so that the network device 300 schedules the terminal device 100 based on the identification information.

In some embodiments, when scheduling data transmission of the terminal device on the second frequency band, the at least one network device 200 or the network device 300 indicates information about a scheduled beam, where the information about the scheduled beam is the identification information of the uplink signal. The terminal device determines, based on the identification information of the uplink signal, a corresponding direction of sending data. Specifically, when sending the uplink signal, the terminal device records a correspondence between the identification information of the uplink signal and the transmission direction. Therefore, the corresponding direction of sending data can be determined based on the identification information of the uplink signal. Signaling for scheduling the data transmission of the terminal device on the second frequency band may be downlink control information (downlink control information, DCI) or the RRC signaling.

In some embodiments, the indication information may be a random access response (random access response, RAR) of a preset type. The RAR includes a timing advance (timing advance, TA) and information corresponding to a successfully detected random access sequence of the TA. The information about the random access sequence may include at least one of configuration information, sequence information, resource information, or moment information (occasion). The information about the random access sequence is related to a sending direction of the information about the random access sequence, and indicates an uplink beam scanning direction used for beam refinement. The information about the successfully detected random access sequence may be the random access sequence detected by the at least one network device 200 or the random access sequence that is detected by the at least one network device 200 and that satisfies the first condition.

In this embodiment of this application, the moment information may alternatively be understood as a sending occasion at which the terminal device sends the random access sequence or may alternatively be understood as a receiving occasion at which the network device 200 receives the random access sequence.

The resource information of the random access sequence includes frequency domain resource information or time domain resource information. The frequency domain resource information is resource information that uses a specific frequency domain resource as a reference point, for example, a physical resource block (physical resource block, PRB) index that uses a point A as the reference point. The time domain resource information is time domain information that uses a specific time domain resource as a reference point or absolute time domain information, for example, the time domain resource information is an occasion index in a specific slot or is a slot index.

In an example of this embodiment, the random access response of the preset type does not include an uplink grant (UL grant).

In some embodiments, the indication information is a random access response message, and the indication information further includes the timing advance TA. In this embodiment, the terminal device 100 may obtain the timing advance TA by receiving the random access response message, and may send the uplink signal to the at least one network device 200 based on the timing advance TA, to perform the beam correspondence.

In some embodiments, step 410 includes: Receive the indication information from the network device 300 from the first frequency band; and step 420 includes: Sending the uplink signal to the at least one second network device on the second frequency band, where the frequency of the second frequency band is higher than the frequency of the first frequency band.

As described above, the network device 300 sends the indication information to the terminal device 100 over the low frequency band. A frequency band between the network device 200 and the terminal device 100 is a high frequency band. The terminal device 100 sends the uplink signal to the network device 200 over a high frequency band, to implement beam correspondence on the high frequency band.

In the solution provided in this embodiment of this application, in the random access process of the terminal device, the network device may send the information about the random access sequence to the terminal device. Therefore, the terminal device has an opportunity to send the uplink signal in a directional and targeted manner based on the information, so that the beam scanning overheads of the terminal device can be reduced, and the beam correspondence between the terminal device and the network device can be implemented as soon as possible.

Next, in more specific embodiments, the solutions provided in embodiments of this application are described by using examples.

### Embodiment 1

In this embodiment, a network device 200 may be a TRP, and a network device 300 may be a base station. A terminal device 100 may be referred to as a terminal device for short. A random access sequence may be a preamble.

This embodiment introduces a new random access mechanism, and indication information of an uplink signal direction used for subsequent beam refinement (beam refinement) may be added to an RAR. The indication information of the uplink signal direction used for subsequent beam refinement is indicated by using related information of a successfully detected preamble (preamble). The related information of the successfully detected preamble is used to identify a direction of the successfully detected preamble and may also be referred to as beam indication information. When learning of the direction of the successfully detected preamble, the terminal device 100 can perform uplink beam scanning in the direction in a targeted manner, to complete beam correspondence.

In this application, the beam correspondence may be narrow beam correspondence. The following uses an example in which the uplink signal is an SRS for detailed description.

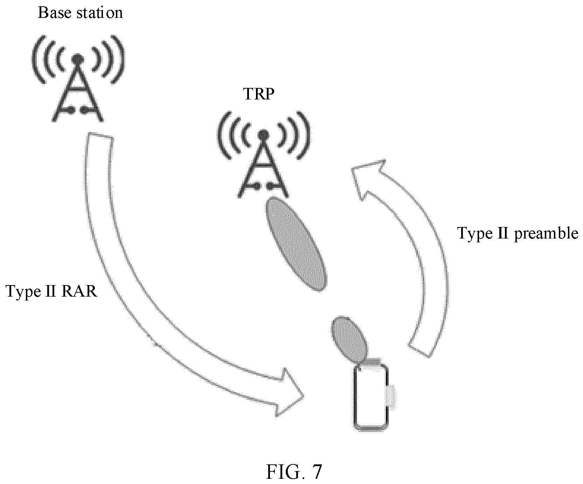

As shown in FIG. 7, an existing random access (random access, RA) may be a type (type) I RA, and a type II RA is defined in this embodiment. First, a type II preamble is defined. The preamble is a grouped sequence and/or resource and is dedicated to a type II RACH. The type II preamble may be sent by using a wide beam. Second, a type II random access response (random access response, RAR) is defined. The RAR includes a timing advance (timing advance, TA) and information corresponding to a successfully detected preamble of the TA. The information may include at least one indication of configuration information, sequence information, resource information, or moment (occasion) information of the preamble. The information about the preamble is related to a direction and indicates an uplink beam scanning direction used for the beam refinement. In addition, the RAR may not include an uplink grant (UL grant).

The preamble may also be referred to as the random access sequence. The type II RAR may also be referred to the indication information.

Based on sending of the type II preamble, the terminal device may correspondingly receive the type II RAR. The terminal device determines, based on the information about the preamble included in the type II RAR, the direction indicated by the RAR and sends the SRS in a corresponding direction, to complete UL beam refinement in a specified direction.

The sending of the SRS in the corresponding direction specifically includes: (1) sending the SRS in the direction indicated by the RAR, (2) sending the SRS in several directions related to the direction indicated by the RAR, or (3) sending the SRS in several directions related to the direction indicated by the RAR/an SRS sending frequency is high in several directions related to the direction indicated by the RAR/the SRS sending period is short in several directions related to the direction indicated by the RAR. In (2), the terminal device needs to derive, based on the beam direction (that is, the direction of the preamble) indicated in the RAR, the several directions related to the direction. In specific implementation, the terminal device may determine, based on historical information, a beam direction adjacent to the beam direction indicated in the RAR as the direction related to the direction. In (3), the base station may be required to configure a sending period for the SRS in a specific direction, or the terminal device determines the sending period according to a first rule. The first rule may be a reference period configured by the base station for sending, and the terminal device may determine, based on the reference period, to follow the reference period to perform sending in the beam direction indicated in the RAR. The sending in the several directions related to the direction follows another period value less than the reference period. The another period value less than the reference period is the reference period minus a preset offset.

It may be understood that the terminal device performs preamble polling in all directions before receiving the RAR. Therefore, information in all directions polled can be determined. When the RAR is received, for the beam direction (or information about a second random access sequence indicated in the RAR) indicated in the RAR, the terminal device may determine one/several beam directions previous to beam directions indicated in corresponding RARs sent or recorded during previous polling, and/or the terminal device may determine one/several beam directions next to the beam directions indicated in the corresponding RARs sent or recorded during previous polling. These beam directions may be referred to as the historical information. Therefore, the terminal device can determine any one or more beam directions that are of the one/several beam directions previous to the beam directions indicated in the corresponding RARs or the one/several beam directions next to the beam directions indicated in the corresponding RARs and that are adjacent to the beam direction indicated in the RAR as the direction related to the direction.

First, behavior of the terminal device is described.

When detecting trigger information about the type II RACH, the terminal device may send the type II preamble in a polling manner on a high frequency band and then record a correspondence between the information about the sent preamble and the direction. The terminal device receives the RAR on a low frequency band and determines, based on the information about the preamble included in the received RAR, the direction of sending the SRS used for the uplink beam correspondence, to complete the beam correspondence. The direction of sending the SRS includes: (1) the direction indicated by the RAR or (2) a first direction set related to the direction indicated by the RAR. The terminal device starts SRS uplink scanning in the direction/the first direction set indicated by the RAR and completes narrow beam (narrow beam) correspondence (for example, U1-U3). The terminal device receives configuration/scheduling of uplink transmission on the low frequency band.

The high frequency band may be any frequency band higher than 6 GHz, and the low frequency band may be any frequency band lower than 6 GHz

The terminal device opens a specific beam or a related beam based on the information about the preamble indicated by the base station and the previous direction of sending the preamble and performs sending. Optionally, the related beam is a surrounding beam. Refer to the first direction set.

Second, behavior of the base station is introduced.

The base station configures the preamble of the type II RACH and sends information, for example, configures the grouped sequence and/or resource dedicated to the type II RACH. The base station triggers the type II RACH on the low frequency band. The base station triggers an application of a direction set rule (for example, the first rule) related to the type II RACH on the low frequency band.

The base station receives an RAR message from the TRP. The base station sends the RAR message to the terminal on the low frequency band, so that the terminal device can complete the uplink beam correspondence in a directional manner. The base station detects information such as a beam that can be scheduled for uplink transmission and that is fed back by the TRP, to schedule the uplink transmission of the beam on a high frequency. Optionally, the scheduled transmission may also be grant-free scheduling.

Finally, behavior of the TRP is introduced.

After detecting the type II preamble, the TRP generates the RAR according to the type II RAR rule, and sends the RAR to the base station through an X2 interface.

Further, the TRP completes the uplink beam correspondence based on the beam direction notified in the RAR. After the uplink beam correspondence, the TRP feeds back the corresponding beam that can be scheduled for the uplink transmission, so that the base station performs the uplink scheduling transmission based on the beam.

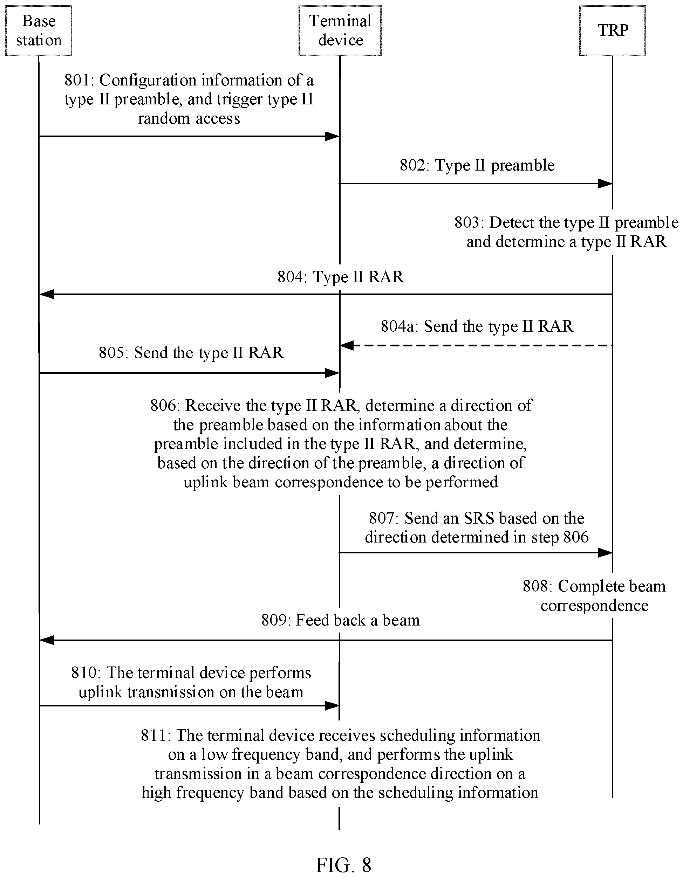

Refer to FIG. 8. This embodiment involves the following procedure.

In the following procedure, the base station works on the low frequency band, the TRP works on the high frequency band, and the high frequency band has only uplink resources or has few downlink resources.

Step 801: When the TRP works on the high frequency band, activate the low frequency band to assist in transmission on the high frequency band. The base station sends the configuration information of the type II preamble to the terminal device and triggers type II random access.

Step 802: The terminal device sends the type II preamble to the TRP. When or after step 702 is performed, the terminal device may record the correspondence between the information about the preamble and the direction of the front-end code.

Step 803: The TRP detects the type II preamble and determines the type II RAR.

Step 804: The TRP may feed back the type II RAR to the base station.

Step 805: The base station may deliver the type II RAR to the terminal device on the low frequency band.

In addition, when there is the downlink resource between the TRP and the terminal device, the TRP may send the type II RAR to the terminal device on the high frequency band by performing step 704a.

Step 806: Receive the type II RAR, determine the direction of the preamble based on the information about the preamble included in the type II RAR and the recorded correspondence between the information about the preamble and the direction of the front-end code, and determine, based on the direction of the preamble, the direction of the uplink beam correspondence to be performed.

Step 807: The terminal device sends the SRS to the TRP based on the related direction determined in step 806.

Step 808: The TRP completes the beam correspondence. Step 809: The TRP feeds back the beam to the base station, and the TRP may indicate the beam by using the information about the preamble detected in step 803.

Step 810: The base station schedules the terminal device to perform the uplink transmission on the beam. Step 811: The terminal device receives scheduling information on the low frequency band, and performs the uplink transmission in a beam correspondence direction on the high frequency band based on the scheduling information.

In this embodiment, the terminal device may send the uplink signal in a specific direction, to reduce blind transmission of the uplink signal. The TRP starts receiving of a measurement signal on a beam in a corresponding direction based on a detection requirement, thereby reducing blind detection by the base station, ensuring reliable receiving of an uplink measurement signal each time, and reducing measurement energy consumption.

For the terminal device, this embodiment provides a reference for the transmission direction of the uplink signal used for beam management. For the TRP, this provides a reference for a detection direction of the uplink signal.

In short, in this embodiment, after the terminal device can obtain the TA through the random access, blind sending of the SRS used for the uplink beam correspondence can be reduced, to enhance accuracy and reliability of the beam scanning, thereby effectively reducing beam scanning overheads and energy consumption of the terminal device.

### Embodiment 2

In this embodiment, when the terminal device sends a preamble for polling, and a plurality of preambles are successfully detected, RAR content design and receiving start of the terminal device are considered.

That the plurality of preambles are successfully detected includes that a plurality of beams under a plurality of TRPs are successfully detected (as shown in FIG. 5A) or a plurality of beams under one TRP are successfully detected (as shown in FIG. 5B).

Refer to FIG. 5A. The random access sequence sent by using the beam 1 may be detected by the TRP 1, and the random access sequence sent by using the beam 2 may be detected by the TRP 2. Refer to FIG. 5B. The TRP detects the random access sequence sent by using the beam U1 and the random access sequence sent by using the beam U2. The random access sequence is the preamble.

In this embodiment, a solution for performing uplink beam correspondence in a case in which the plurality of preambles are detected is described.

First, behavior of the TPR is described.

On an X2 interface between the TRP and a base station, the TRP sends, to the base station, a signal strength of a detected preamble that satisfies a first condition and information about the preamble. Satisfying the first condition is that the signal strength of the detected preamble is greater than or equal to a preset first threshold. For example, the preset first threshold may be configured by the base station. For example, the preset first threshold may alternatively be determined by the TRP.

The preamble that satisfies the first condition is the preamble that is detected by the TRP and whose signal strength is greater than or equal to the first threshold. The first threshold may be configured by the base station and sent to the TRPs or determined by the TRPs. The first threshold is determined by the TRPs means that the TRPs determine, based on detection signal strength sensitivity, whether corresponding preambles are successfully detected and whether the first condition is satisfied.

Second, behavior of the base station is introduced.

After receiving the signal strength of the detected preamble that satisfies the first condition and the information about the preamble, the base station determines that information about at least one preamble is included and sends the information to the terminal device by including the information in a type II RAR. The information about the at least one preamble is used by the terminal device to send an SRS, to perform the uplink beam correspondence. The information about the preamble may also be referred to as indication information of an SRS beam direction.

The indication information of the SRS beam direction includes: (1) information about a preamble corresponding to a highest signal strength, (2) information about preambles corresponding to X highest signal strengths after signal strengths of preambles that satisfy the first condition are sorted, or (3) information about preambles corresponding to all signal strengths that satisfy the first condition. A value of X may be determined by the base station.

The base station may send the RAR to the terminal device on a low frequency band.

Finally, behavior of the terminal device is described.

After polling the preamble on the beams to the TRP, the terminal device starts a random access response window to receive an RAR message. The terminal device sends the SRS based on a beam direction indicated by the information about the preamble, to complete the uplink beam correspondence. For example, the SRS is sequentially sent based on an order of the plurality of beam directions indicated in the RAR, to complete the uplink beam correspondence.

The terminal device performs sending in the direction based on a beam whose width is the same as that of the beam of the front-end code or performs sending based on a narrow beam whose width is finer than that of the beam of the preamble.

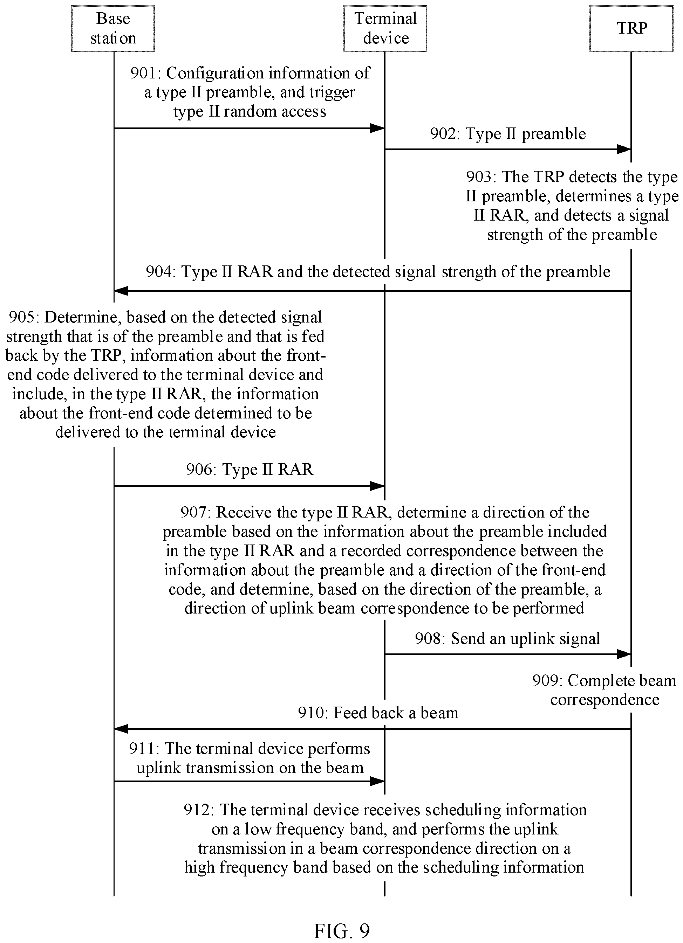

Refer to FIG. 9. This embodiment involves the following procedure.

In the following procedure, the base station works on the low frequency band, the TRP works on a high frequency band, and the high frequency band has only uplink resources or has few downlink resources.

Step 901: When the TRP works on the high frequency band, activate the low frequency band to assist in transmission on the high frequency band. The base station sends configuration information of a type II preamble to the terminal device and triggers type II random access.

Step 902: The terminal device sends the type II preamble to the TRP. When or after step 702 is performed, the terminal device may record a correspondence between the information about the preamble and the direction of the front-end code.

Step 903: The TRP detects the type II preamble, determines the type II RAR, and detects the signal strength of the preamble.

Step 904: The TRP feeds back the type II RAR to the base station and the signal strength of the detected preamble.

Step 905: The base station determines, based on the detected signal strength that is of the preamble and that is fed back by the TRP, the information about the front-end code delivered to the terminal device and includes, in the type II RAR, the information about the front-end code determined to be delivered to the terminal device.

Step 906: The base station sends the type II RAR to the terminal device on the low frequency band.

Step 907: Receive the type II RAR, determine the direction of the preamble based on the information about the preamble included in the type II RAR and the recorded correspondence between the information about the preamble and the direction of the front-end code, and determine, based on the direction of the preamble, the direction of the uplink beam correspondence to be performed.

Step 908: The terminal device sends the SRS to the TRP based on the related direction determined in step 907.

Step 909: The TRP completes the beam correspondence. Step 810: The TRP feeds back the beam to the base station, and the TRP may indicate the beam by using the information about the preamble detected in step 903.

Step 911: The base station schedules the terminal device to perform the uplink transmission on the beam. Step 912: The terminal device receives scheduling information on the low frequency band, and performs the uplink transmission in a beam correspondence direction on the high frequency band based on the scheduling information.

In this embodiment, for a case in which the plurality of preambles are successfully detected, indication information that includes the plurality of preambles may be sent by using one RAR, thereby reducing costs of RAR scheduling and optimizing a system. Considering the reduced RAR scheduling, a low modulation, encoding, and demodulation scheme may be used for sending the RAR, to ensure reliable receiving and reduce an access delay. The terminal device preferably performs scanning in a direction in which an optimal signal strength is located. This also helps implement the beam correspondence as soon as possible, determine a beam used for uplink data communication as soon as possible, and accelerate the uplink beam correspondence of the terminal device.

With reference to the foregoing embodiments, the solution provided in embodiments of this application can resolve a beam refinement problem/a problem that the sending direction of the uplink beam correspondence is unknown, so that a network side starts receiving of the measurement signal on a corresponding beam based on a detection requirement, thereby reducing unnecessary energy consumption on the network side. The terminal device may perform corresponding sending in the indicated direction, thereby reducing blind sending of the SRS used for the uplink beam correspondence, enhancing accuracy and reliability of the beam scanning, and further, effectively reducing beam scanning overheads and energy consumption of the terminal device and completing fast beam correspondence.

In addition, for RAR scheduling costs generated when a terminal device sends the preamble or the random access sequence on the beams in the polling manner, and if feedback of the plurality of beams is sent together in one RAR, how the terminal device can determine, based on the RAR, a beam to which feedback corresponds, according to the solution in embodiments of this application, the indication information including the plurality of beams may be sent in the one RAR, so that the terminal device preferably performs the scanning in the direction in which the beam with the optimal signal strength is located. This helps implement the beam correspondence as soon as possible while minimizing the system costs, determine the beam used for the uplink data communication as soon as possible, and accelerate the uplink beam correspondence of the terminal device.

In addition, when a terminal device sends the preamble or the random access sequence on the plurality of beams in the polling manner and receives the random access response, if an RAR for a specific beam is not accurately received, for how to enhance problems such as missed detection and a failure in transmission of a previous RAR by using an RAR for a subsequent beam, the solution provided in embodiments of this application improves reliability of RAR notification, reduces a decoding failure rate of the RAR, and accelerates the uplink beam correspondence of the terminal device.

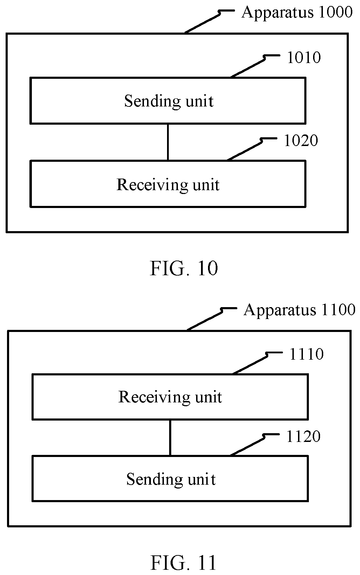

Refer to FIG. 10. An embodiment of this application provides a communication apparatus 1000. The apparatus 1000 may be configured in a terminal device, for example, the terminal device 1000 described above.

Refer to FIG. 10. The apparatus 1000 includes a sending unit 1010 and a receiving unit 1020.

The sending unit 1010 is configured to send a first random access sequence to at least one second network device.

The receiving unit 1020 is configured to receive indication information from a first network device or the at least one second network device, where the indication information includes information about a second random access sequence, the information about the second random access sequence includes at least one of configuration information, sequence information, resource information, or moment information of the second random access sequence, and the second random access sequence is included in the first random access sequence.

In some embodiments, the apparatus 100 further includes a processing unit. The processing unit is configured to: determine, based on the indication information, a direction of sending an uplink signal to the at least one second network device; and the sending unit is further configured to send the uplink signal to the at least one second network device, where the uplink signal includes a sounding reference signal, a demodulation reference signal, or a first uplink signal.

In some embodiments, the second random access sequence is a random access sequence that is in the first random access sequence and that is detected by the at least one second network device or a random access sequence that is in the first random access sequence and that is detected by the at least one second network device and that satisfies a first condition, and the first condition is that a signal strength is greater than or equal to a first threshold.

In some embodiments, there is an association relationship between the direction of sending the uplink signal to the at least one second network device and the information about the second random access sequence or a direction indicated by the information about the second random access sequence.

In some embodiments, the indication information is a random access response message, and the indication information further includes a timing advance TA.

In some embodiments, the receiving unit 1020 is further configured to receive the indication information from the first network device from a first frequency band; and the sending the uplink signal to the at least one second network device includes: sending the uplink signal to the at least one second network device on a second frequency band, where a frequency of the second frequency band is higher than a frequency of the first frequency band.

In some embodiments, the receiving unit 1020 is further configured to receive configuration information of the uplink signal from the first network device, where the configuration information of the uplink signal includes a sending period of the uplink signal on the second frequency band, the sending period is used to send an uplink signal in the direction determined based on the indication information, and the sending period is less than a sending period of another uplink signal sent to the at least one second network device.

In some embodiments, the sending unit 1010 is further configured to sequentially send the uplink signal based on an order of the information of the second random access sequences included in the indication information.

In some embodiments, the receiving unit 1020 is further configured to obtain configuration information of the first random access sequence from the first network device, where the configuration information of the first random access sequence is information about the first random access sequence sent to the at least one second network device, and the configuration information of the first random access sequence includes at least one of the following: a quantity of times for sending the first random access sequence in at least one direction, and an interval for sending the first random access sequences in at least one direction.

In some embodiments, the sending unit 1010 is further configured to: after sending the first random access sequence to the at least one second network device in a first quantity of directions based on the configuration information of the first random access sequence, start a receive window for the indication information, and receive the indication information in the receive window for the indication information, where the first quantity is an integer greater than or equal to 1.

In some embodiments, the first random access sequence includes a first part of the first random access sequence and a second part of the first random access sequence; and second indication information includes information about a third random access sequence, the third random access sequence belongs to the first part of the first random access sequence, and the second indication information is received in a receive window for the second part of the first random access sequence.

In some embodiments, the second indication information further includes information about a fourth random access sequence, and the fourth random access sequence belongs to the second part of the first random access sequence.

In some embodiments, the apparatus further includes an ignoring unit. The ignoring unit is configured to: when the apparatus receives first indication information and receives the second indication information, ignore the information about the third random access sequence included in the second indication information; and the sending unit is further configured to: when the apparatus fails to receive the first indication information but receives the second indication information, send the uplink signal based on the second indication information, where the first indication information is received in a receive window for the first part of the first random access sequence.

Functions of functional units of the apparatus in this embodiment of this application may be implemented with reference to functions of the terminal device 100 in the method embodiments shown in FIG. 4A, FIG. 4B, or FIG. 4C.

Refer to FIG. 11. An embodiment of this application provides a communication apparatus 1100, configured in a first network device, for example, the network device 300 described above.

Refer to FIG. 11. The apparatus 1100 includes a receiving unit 1110 and a sending unit 1120.

The receiving unit 1110 is configured to receive information about a fifth random access sequence from at least one second network device.

The sending unit 1120 is configured to send indication information, where the indication information includes information about a second random access sequence, and the information about the second random access sequence includes at least one of configuration information, sequence information, resource information, or moment information of the second random access sequence.

In some embodiments, the fifth random access sequence is a random access sequence that is in a first random access sequence and that is detected by the at least one second network device or a random access sequence that is in a first random access sequence, that is detected by the at least one second network device and that satisfies a first condition, the first random access sequence is sent by the terminal device to the at least one second network device, and the first condition is that a signal strength is greater than or equal to a first threshold.

In some embodiments, the apparatus 1100 further includes a processing unit. The receiving unit 1110 is further configured to receive a signal strength of the fifth random access sequence from the at least one second network device; and the processing unit is further configured to determine the second random access sequence from the fifth random access sequence based on the signal strength of the fifth random access sequence.

In some embodiments, the processing unit is further configured to: sort signal strengths of the fifth random access sequences, and select fifth random access sequences corresponding to N highest signal strengths as the second random access sequences, where N is a positive integer greater than or equal to 1.

In some embodiments, the first threshold is notified by the first network device to the at least one second network device.

In some embodiments, the indication information is a random access response message, and the indication information further includes a timing advance TA.

In some embodiments, the sending unit 1120 is further configured to send the indication information to the terminal device from a first frequency band, where a frequency of the first frequency band is lower than a frequency of a second frequency band, and the second frequency band is a frequency band used by the terminal device to send an uplink signal to the at least one second network device.

In some embodiments, the sending unit 1120 is further configured to send configuration information of the uplink signal to the terminal device and/or the at least one second network device, where the configuration information of the uplink signal includes a sending period of the uplink signal on the second frequency band, the sending period is used to send an uplink signal in a direction determined based on the indication information, and the sending period is less than a sending period of another uplink signal sent by the terminal device to the at least one second network device.

In some embodiments, the sending unit 1120 is further configured to send configuration information of the first random access sequence to the terminal device and/or the at least one second network device, where the configuration information of the first random access sequence is used by the terminal device to send the first random access sequence to the at least one second network device, and the configuration information of the first random access sequence includes at least one of the following: a quantity of times for sending the first random access sequence in at least one direction, and an interval for sending the first random access sequences in at least one direction.

In some embodiments, the first random access sequence includes a first part of the first random access sequence and a second part of the first random access sequence; the indication information includes first indication information and second indication information; and the sending unit 1020 is further configured to send the first indication information and the second indication information to the terminal device, where the first indication information is indication information sent in a receive window for the first part of the first random access sequence, the second indication information is indication information sent in a receive window for the second part of the first random access sequence, the second indication information includes information about a third random access sequence, and the third random access sequence belongs to the first part of the first random access sequence.

In some embodiments, the second indication information further includes information about a fourth random access sequence, and the fourth random access sequence belongs to the second part of the first random access sequence.

Functions of functional units of the apparatus in this embodiment of this application may be implemented with reference to functions of the network device 300 in the method embodiments shown in FIG. 4A, FIG. 4B, or FIG. 4C.

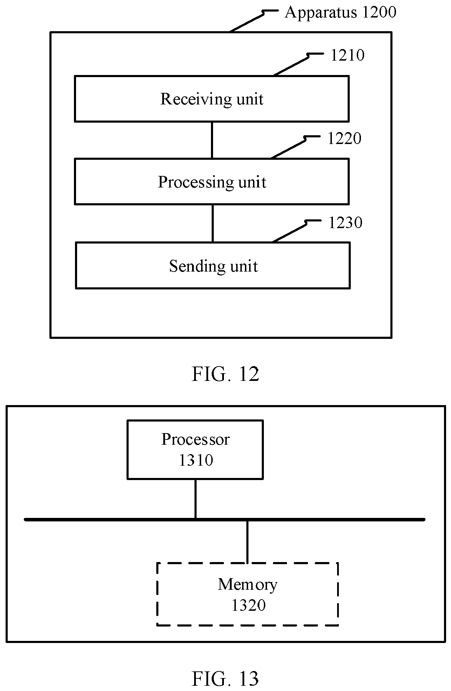

Refer to FIG. 12. An embodiment of this application further provides a communication apparatus 1200, configured in at least one second network device, for example, the at least one network device 200 described above.

As shown in FIG. 12, the apparatus 1200 includes a receiving unit 1210, a processing unit 1220, and a sending unit 1230.

The receiving unit 1210 is configured to receive a first random access sequence from a terminal device.

The processing unit 1220 is configured to determine a fifth random access sequence.

The sending unit 1230 is configured to send information about the fifth random access sequence to a first network device. The fifth random access sequence is a random access sequence detected in the first random access sequence or a random access sequence that is detected in the first random access sequence and that satisfies a first condition, and the first condition is that a signal strength is greater than or equal to a first threshold. A random access sequence with a strong signal strength is selected from the first random access sequence based on the first threshold, and scanning may be preferably performed in a direction in which a beam with the strong signal strength is located. This helps implement beam correspondence as soon as possible while minimizing system costs.

In some embodiments, the sending unit 1230 is further configured to send a signal strength of the fifth random access sequence to the first network device.

In some embodiments, the receiving unit 1210 is further configured to receive the first threshold from the first network device, where the first threshold is used to determine, from the first random access sequence, a fifth random access sequence that satisfies the first condition.

In some embodiments, the receiving unit 1210 is further configured to receive configuration information of an uplink signal from the first network device, where the configuration information of the uplink signal includes a sending period of the uplink signal on a second frequency band, the sending period is used to send an uplink signal in a direction determined based on indication information, and the sending period is less than a sending period of another uplink signal sent by the terminal device to the at least one second network device, thereby ensuring transmission reliability in the transmission direction determined based on the indication information.

In some embodiments, the receiving unit 1210 is further configured to obtain configuration information of the first random access sequence from the first network device, where the configuration information of the first random access sequence is used by the terminal device to send the first random access sequence to the at least one second network device, and the configuration information of the first random access sequence includes at least one of the following: a quantity of times for sending the first random access sequence in at least one direction, and an interval for sending the first random access sequences in at least one direction.

In some embodiments, the receiving unit 1210 is further configured to receive the uplink signal from the terminal device in a direction of the fifth random access sequence or a direction associated with the fifth random access sequence; and the sending unit 1230 is further configured to send identification information of the uplink signal to the first network device, where the identification information is information that is used for scheduling beam transmission on a terminal device side after the beam correspondence is completed by the at least one second network device.

In some embodiments, the receiving unit 1210 is further configured to receive the first random access sequence from the terminal device on the second frequency band, where a frequency of the second frequency band is higher than a frequency of a first frequency band, the first frequency band is a frequency band used by the first network device to send the indication information to the terminal device, the indication information includes information about a second random access sequence, the information about the second random access sequence includes at least one of configuration information, sequence information, resource information, or moment information of the second random access sequence, and the second random access sequence is included in the first random access sequence.

Functions of functional units of the apparatus in this embodiment of this application may be implemented with reference to functions of the network device 200 in the method embodiments shown in FIG. 4A, FIG. 4B, or FIG. 4C.

An embodiment of this application provides a communication apparatus. Refer to FIG. 13. The apparatus includes at least one processor 1310. The processor 1310 is configured to execute a program stored in a memory 1320, and when the program is executed, an apparatus 1300 is enabled to perform operations performed by the terminal device 100 in the method embodiments shown in FIG. 4A, FIG. 4B, or FIG. 4C. For example, as shown in FIG. 13, the memory 1320 may be disposed in the uplink sending apparatus.

An embodiment of this application provides a communication apparatus. Still refer to FIG. 13. The apparatus includes at least one processor 1310. The processor is configured to execute a program stored in a memory 1320, and when the program is executed, an apparatus 1300 is enabled to perform operations performed by the network device 300 in the method embodiments shown in FIG. 4A, FIG. 4B, or FIG. 4C. For example, as shown in FIG. 13, the memory 1320 may be disposed in the uplink sending apparatus.

An embodiment of this application provides a communication apparatus. Still refer to FIG. 13. The apparatus includes at least one processor 1310. The processor is configured to execute a program stored in a memory 1320, and when the program is executed, an apparatus 1300 is enabled to perform operations performed by the at least one network device 200 in the method embodiments shown in FIG. 4A, FIG. 4B, or FIG. 4C. For example, as shown in FIG. 13, the memory 1320 may be disposed in the uplink sending apparatus.

Method steps in embodiments of this application may be implemented by hardware, or may be implemented by a processor executing software instructions. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

All or some of the foregoing embodiments may be implemented by using software, hardware, firmware, or any combination thereof. When software is used to implement embodiments, all or some embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

It may be understood that various numbers in embodiments of this application are merely used for distinguishing for ease of description and are not used to limit the scope of embodiments of this application.

## Claims

1. A communication method, applied to a terminal device, wherein the method comprises:
sending a first random access sequence to at least one second network device; and
receiving indication information from a first network device or the at least one second network device, wherein
the indication information comprises information about a second random access sequence, the information about the second random access sequence comprises at least one of configuration information, sequence information, resource information, or moment information of the second random access sequence, and the second random access sequence is comprised in the first random access sequence.

2. The method according to claim 1, wherein the method further comprises:
determining, based on the indication information, a direction of sending an uplink signal to the at least one second network device; and
sending the uplink signal to the at least one second network device, wherein
the uplink signal comprises a sounding reference signal, a demodulation reference signal, or a first uplink signal.

3. The method according to claim 1 or 2, wherein the second random access sequence is a random access sequence that is in the first random access sequence and that is detected by the at least one second network device or a random access sequence that is in the first random access sequence, that is detected by the at least one second network device, and that satisfies a first condition, and the first condition is that a signal strength is greater than or equal to a first threshold.

4. The method according to claim 2, wherein there is an association relationship between the direction of sending the uplink signal to the at least one second network device and the information about the second random access sequence or a direction indicated by the information about the second random access sequence.

5. The method according to any one of claims 1 to 4, wherein the indication information is a random access response message, and the indication information further comprises a timing advance TA.

6. The method according to claim 2 or 4, wherein the receiving indication information from a first network device or the at least one second network device comprises:
receiving the indication information from the first network device from a first frequency band; and
the sending the uplink signal to the at least one second network device comprises:
sending the uplink signal to the at least one second network device on a second frequency band, wherein
a frequency of the second frequency band is higher than a frequency of the first frequency band.

7. The method according to any one of claims 1 to 6, wherein the method further comprises:
receiving configuration information of the uplink signal from the first network device, wherein the configuration information of the uplink signal comprises a sending period of the uplink signal on the second frequency band, the sending period is used to send an uplink signal in the direction determined based on the indication information, and the sending period is less than a sending period of another uplink signal sent to the at least one second network device.

8. The method according to claim 2 or 4, wherein the sending the uplink signal to the at least one second network device comprises:
sequentially sending the uplink signal based on an order of the information about the second random access sequence comprised in the indication information.

9. The method according to any one of claims 1 to 8, wherein the method further comprises:
obtaining configuration information of the first random access sequence from the first network device, wherein the configuration information of the first random access sequence is information about the first random access sequence sent to the at least one second network device, and the configuration information of the first random access sequence comprises at least one of the following:
a quantity of times for sending the first random access sequence in at least one direction, and
an interval for sending the first random access sequences in at least one direction.

10. The method according to claim 9, wherein the sending a first random access sequence to at least one second network device comprises:
after sending the first random access sequence to the at least one second network device in a first quantity of directions based on the configuration information of the first random access sequence, starting a receive window for the indication information, and receiving the indication information in the receive window for the indication information, wherein the first quantity is an integer greater than or equal to 1.

11. The method according to any one of claims 1 to 10, wherein the first random access sequence comprises a first part of the first random access sequence and a second part of the first random access sequence; and
second indication information comprises information about a third random access sequence, the third random access sequence belongs to the first part of the first random access sequence, and the second indication information is received in a receive window for the second part of the first random access sequence.

12. The method according to claim 11, wherein the second indication information further comprises information about a fourth random access sequence, and the fourth random access sequence belongs to the second part of the first random access sequence.

13. The method according to claim 11 or 12, wherein the method further comprises:
when the terminal device receives first indication information and receives the second indication information, ignoring, by the terminal device, the information about the third random access sequence comprised in the second indication information; and
when the terminal device fails to receive the first indication information but receives the second indication information, sending, by the terminal device, the uplink signal based on the second indication information, wherein
the first indication information is received in a receive window for the first part of the first random access sequence.

14. A communication method, applied to a first network device, wherein the method comprises:
sending indication information to a terminal device, wherein
the indication information comprises information about a second random access sequence, and the information about the second random access sequence comprises at least one of configuration information, sequence information, resource information, or moment information of the second random access sequence.

15. The method according to claim 14, wherein before the sending indication information to a terminal device, the method further comprises:
receiving information about a fifth random access sequence from at least one second network device, wherein
the second random access sequence belongs to the fifth random access sequence.

16. The method according to claim 15, wherein the fifth random access sequence is a random access sequence that is in a first random access sequence and that is detected by the at least one second network device or a random access sequence that is in a first random access sequence, that is detected by the at least one second network device and that satisfies a first condition, the first random access sequence is sent by the terminal device to the at least one second network device, and the first condition is that a signal strength is greater than or equal to a first threshold.

17. The method according to claim 15 or 16, wherein the method further comprises:
receiving a signal strength of the fifth random access sequence from the at least one second network device; and
determining the second random access sequence from the fifth random access sequence based on the signal strength of the fifth random access sequence.

18. The method according to claim 17, wherein the determining the second random access sequence from the fifth random access sequence based on the signal strength of the fifth random access sequence comprises:
sorting signal strengths of the fifth random access sequence, and selecting fifth random access sequences corresponding to N highest signal strengths as the second random access sequence, wherein N is a positive integer greater than or equal to 1.

19. The method according to claim 16, wherein the first threshold is notified by the first network device to the at least one second network device.

20. The method according to any one of claims 14 to 19, wherein the indication information is a random access response message, and the indication information further comprises a timing advance TA.

21. The method according to any one of claims 14 to 20, wherein the sending indication information to a terminal device comprises:
sending the indication information to the terminal device from a first frequency band, wherein
a frequency of the first frequency band is lower than a frequency of a second frequency band, and the second frequency band is a frequency band used by the terminal device to send an uplink signal to the at least one second network device.

22. The method according to any one of claims 14 to 21, wherein the method further comprises:
sending configuration information of the uplink signal to the terminal device and/or the at least one second network device, wherein the configuration information of the uplink signal comprises a sending period of the uplink signal on the second frequency band, the sending period is used to send an uplink signal in a direction determined based on the indication information, and the sending period is less than a sending period of another uplink signal sent by the terminal device to the at least one second network device.

23. The method according to any one of claims 14 to 22, wherein the method further comprises:
sending configuration information of the first random access sequence to the terminal device and/or the at least one second network device, wherein the configuration information of the first random access sequence is used by the terminal device to send the first random access sequence to the at least one second network device, and the configuration information of the first random access sequence comprises at least one of the following:
a quantity of times for sending the first random access sequence in at least one direction, and
an interval for sending the first random access sequences in at least one direction.

24. The method according to claim 16 or 23, wherein the first random access sequence comprises a first part of the first random access sequence and a second part of the first random access sequence;
the indication information comprises first indication information and second indication information; and
the sending indication information to a terminal device comprises:
sending the first indication information and the second indication information to the terminal device, wherein the first indication information is indication information sent in a receive window for the first part of the first random access sequence, the second indication information is indication information sent in a receive window for the second part of the first random access sequence, the second indication information comprises information about a third random access sequence, and the third random access sequence belongs to the first part of the first random access sequence.

25. The method according to claim 24, wherein the second indication information further comprises information about a fourth random access sequence, and the fourth random access sequence belongs to the second part of the first random access sequence.

26. A communication method, applied to a second network device, wherein the method comprises:
receiving a first random access sequence from a terminal device;
determining a fifth random access sequence; and
sending information about the fifth random access sequence to a first network device, wherein
the fifth random access sequence is a random access sequence detected in the first random access sequence or a random access sequence that is detected in the first random access sequence and that satisfies a first condition, and the first condition is that a signal strength is greater than or equal to a first threshold.

27. The method according to claim 26, wherein the second network device further sends a signal strength of the fifth random access sequence to the first network device.

28. The method according to claim 26 or 27, wherein the method further comprises:
receiving the first threshold from the first network device, wherein the first threshold is used to determine, from the first random access sequence, a fifth random access sequence that satisfies the first condition.

29. The method according to any one of claims 26 to 28, wherein the method further comprises:
receiving configuration information of an uplink signal from the first network device, wherein the configuration information of the uplink signal comprises a sending period of the uplink signal on a second frequency band, the sending period is used by the terminal device to send an uplink signal in a direction determined based on indication information, and the sending period is less than a sending period of another uplink signal sent by the terminal device to at least one second network device.

30. The method according to any one of claims 26 to 29, wherein the method further comprises:
receiving configuration information of the first random access sequence from the first network device, wherein the configuration information of the first random access sequence is used by the terminal device to send the first random access sequence to the at least one second network device, and the configuration information of the first random access sequence comprises at least one of the following:
a quantity of times for sending the first random access sequence in at least one direction, and
an interval for sending the first random access sequences in at least one direction.

31. The method according to any one of claims 26 to 30, wherein the method further comprises:
receiving the uplink signal from the terminal device in a direction of the fifth random access sequence or a direction associated with the fifth random access sequence; and
sending identification information of the uplink signal to the first network device, wherein the identification information is information that is used for scheduling beam transmission on a terminal device side after beam correspondence is completed by the at least one second network device.

32. The method according to any one of claims 26 to 31, wherein the receiving a first random access sequence from a terminal device comprises:
receiving the first random access sequence from the terminal device on the second frequency band, wherein
a frequency of the second frequency band is higher than a frequency of a first frequency band, the first frequency band is a frequency band used by the first network device to send the indication information to the terminal device, the indication information comprises information about a second random access sequence, the information about the second random access sequence comprises at least one of configuration information, sequence information, resource information, or moment information of the second random access sequence, and the second random access sequence is comprised in the first random access sequence.

33. A communication apparatus, configured to implement the method according to any one of claims 1 to 13, or
implement the method according to any one of claims 14 to 25, or
implement the method according to any one of claims 26 to 32.

34. A communication apparatus, wherein the communication apparatus comprises a processor and a storage medium, the storage medium stores instructions, and when the instructions are run by the processor, the method according to any one of claims 1 to 13 is implemented, the method according to any one of claims 14 to 25 is implemented, or the method according to any one of claims 26 to 32 is implemented.

35. A computer program product, wherein the computer-readable storage medium comprises instructions, and when the instructions are run by a processor, the method according to any one of claims 1 to 13 is implemented, the method according to any one of claims 14 to 25 is implemented, or the method according to any one of claims 26 to 32 is implemented.

36. A computer-readable storage medium, wherein the computer-readable storage medium comprises instructions, and when the instructions are run by a processor, the method according to any one of claims 1 to 13 is implemented, the method according to any one of claims 14 to 25 is implemented, or the method according to any one of claims 26 to 32 is implemented.
